# EUROPÄISCHE PATENTANMELDUNG

(11) **EP 2 857 843 A1**
(43) Veröffentlichungstag der Anmeldung: **08.04.2015**
(21) Anmeldenummer: 13004813.5
(22) Anmeldetag: 07.10.2013
(51) Int. Cl.: G01N 35/00

(54) **System aufweisend mindestens zwei Laborgeräte zur gerätegesteuerten Bearbeitung einer Teilaufgabe bei einem Behandlungsprozess beinhaltend Behandlungen mindestens einer Laborprobe, Laborgerät und Verfahren**

(71) Anmelder: EPPENDORF AG, 22339 Hamburg (DE)
(72) Erfinder: Dr. Goemann-Thoss, Wolfgang, 22339 Hamburg (DE); Dr. Wente, Wolf, 22339 Hamburg (DE); Thieme, Andreas, 22339 Hamburg (DE); Dr. Frerichs, Jan-Gerdd, 22339 Hamburg (DE); Markau, Christiane, 22339 Hamburg (DE); Hacker, Jan-Hendrik, 22339 Hamburg (DE)
(74) Vertreter: Ricker, Mathias

(57) **Zusammenfassung**

Die Erfindung bezieht sich auf ein Laborgerät zur gerätegesteuerten Bearbeitung einer Teilaufgabe bei einem Behandlungsprozess, der Behandlungen mindestens einer Laborprobe beinhaltet. Die Erfindung betrifft zudem ein System beinhaltend mehrere solcher Laborgeräte, wobei das System der gerätegesteuerten Bearbeitung einer dieser mehrere Teilaufgaben beinhaltenden Aufgabe bei dem Behandlungsprozess mindestens einer Laborprobe dient. Und die Erfindung bezieht sich auf ein Verfahren zur gerätegesteuerten Bearbeitung einer Teilaufgabe bei einem Behandlungsprozess, der Behandlungen mindestens einer Laborprobe beinhaltet.

## Beschreibung

Die Erfindung bezieht sich auf ein Laborgerät zur gerätegesteuerten Bearbeitung einer Teilaufgabe bei einem Behandlungsprozess, der Behandlungen mindestens einer Laborprobe beinhaltet. Die Erfindung betrifft zudem ein System beinhaltend mehrere solcher Laborgeräte, wobei das System der gerätegesteuerten Bearbeitung einer diese mehreren Teilaufgaben beinhaltenden Aufgabe bei dem Behandlungsprozess mindestens einer Laborprobe dient. Und die Erfindung bezieht sich auf ein Verfahren zur gerätegesteuerten Bearbeitung einer Teilaufgabe bei einem Behandlungsprozess, der Behandlungen mindestens einer Laborprobe beinhaltet.

Laborgeräte werden verwendet, um in chemischen, biologischen, biochemischen, medizinischen oder forensischen Laboratorien Laborproben, insbesondere flüssige Laborproben, mit hoher Effizienz zu bearbeiten. Laborgeräte automatisieren Behandlungsschritte zumindest teilweise, die sonst manuell durchgeführt werden müssten, und steigern auf diese Weise die Geschwindigkeit, Präzision und Zuverlässigkeit dieser Behandlungen. Eine Behandlung von zumeist flüssigen Laborproben kann darauf gerichtet sein, diese Laborproben, insbesondere deren Zusammensetzung, physikalisch, chemisch, biochemisch oder auf andere Weise zu ändern oder zu untersuchen oder zu analysieren.

Laborgeräte weisen mindestens eine Behandlungseinrichtung zur gerätegesteuerten Behandlung der mindestens einen Laborprobe auf. Sie weisen oft eine Programmsteuerung auf, mittels der ein Benutzer des Laborgeräts die durchzuführende Behandlung durch Einstellen der gewünschten Programmparameter festlegen kann. Die Einstellung der Programmparameter erfolgt über eine Bedieneinheit des Laborgeräts, welche die Ein- und Ausgabe von Informationen, insbesondere von Werten der Programmparameter ermöglicht.

Bei der Arbeit in Laboren an Laborproben wird oft eine Vielzahl von Laborgeräten benötigt, um eine komplexe Aufgabe erfolgreich zu beenden. Als Beispiel kann die Gewinnung von DNA aus forensischen Proben dienen. Eine in der Forensik gebräuchliche DNA-Isolierungsmethode ist die Chelex-Extraktion. Chelex besteht aus Kunstharzpartikeln, die als Träger für einen an die Oberfläche gebundenen Chelator dienen. Chelex bindet zweiwertige Ionen wie Mg²⁺ oder Ca²⁺ und inaktiviert in der Lösung dadurch bestimmte, bei der DNA-Gewinnung unerwünschte Enzyme, z.B. den DNAsen. Als Nebenwirkung werden das Cytoskelett einer Zelle bzw. bestimmte extrazelluläre Strukturproteine inaktiviert, was die Zelle in unerwünschter Weise destabilisiert. Zugabe von Proteinase K führt zum Abbau der unerwünschten Enzyme und Strukturproteine und letztlich zum Abbau der Zelle in gewünschter Weise, unter Freisetzung der zu gewinnenden DNA. Durch Kochen wird die Proteinase deaktiviert, da diese insbesondere die PCR (Polymerasekettenreaktion) behindern würde, mit der die Spuren von DNA schließlich vervielfältigt werden. Um aus einer Blutprobe DNA zu gewinnen sind bei diesem Verfahren z.B. folgende Schritte üblich. Falls eine Vielzahl von Proben verarbeitet werden muss, werden Laborgeräte verwendet, mit denen eine Vielzahl von Proben parallel verarbeitet werden kann:
1. Blut in 1,5 ml Röhrchen überführen; Zugabe von sterilem Aqua bidest.; Inkubation der Proben bei Raumtemperatur. Für diese Schritte wird z.B. ein Laborautomat (Pipettierautomat) zur Behandlung flüssiger Proben verwendet.
2. Proben zentrifugieren. Für diesen Schritt wird eine Laborzentrifuge verwendet.
3. Entnahme des wässrigen Überstands, so dass die Probe mit wenig Flüssigkeit im Probenröhrchen verbleibt. Zugabe von Chelex und Proteinase K. Dafür wird ein Laborautomat (Pipettierrautomat) zur Behandlung flüssiger Proben verwendet, der Proben insbesondere auch Mischen kann, da ein Mischgerät, insbesondere auch ein temperierbares Mischgerät integriert ist.
4. Proben werden unter leichtem Schütteln bei 56 °C im Wasserbad inkubiert. Dazu wird z.B. ein Inkubator mit integriertem Laborschüttler verwendet oder auch ein temperierbares Mischgerät
5. Proben werden gemischt. Dafür wird der Laborautomat (Pipettierautomat) zur Behandlung flüssiger Proben verwendet, der Proben insbesondere auch Mischen kann, da ein Mischgerät, insbesondere auch ein temperierbares Mischgerät integriert ist.
6. Proben werden bei 100 °C inkubiert, dann bei 4 °C. Dazu wird z.B. ein Inkubator mit integriertem Laborschüttler verwendet od. auch ein temperierbares Mischgerät.
7. Proben werden erneut gemischt. Dafür wird der Laborautomat zur Behandlung flüssiger Proben verwendet, der Proben insbesondere auch Mischen kann, da ein Mischgerät, insbesondere auch ein temperierbares Mischgerät integriert ist.
8. Proben werden zentrifugiert. Für diesen Schritt wird eine Laborzentrifuge verwendet.
9. Proben werden amplifiziert, mittels PCR. Dafür wird z.B. ein Laborautomat zur Behandlung flüssiger Proben verwendet, der insbesondere einen integrierten Thermocycler aufweist, mit dem die PCR automatisiert abläuft.
10. Gegebenenfalls wird ein Teil der Proben eingefroren. Dazu wird ein Labor-Gefriergerät verwendet.

Die diesem Behandlungsprozess zugrunde liegende Aufgabe, nämlich die Gewinnung einer gewünschten DNA-Menge aus einer Blutprobe, lässt sich in die genannten Teilaufgaben Nr. 1 bis 10 untergliedern. Jede Teilaufgabe beinhaltet eine Behandlung der Laborproben in vorbestimmter Weise und benötigt jeweils ein bestimmtes Laborgerät.

Meist wird bei der Durchführung dieser Schritte vom Laborant festgestellt, welche Rahmenbedingungen für die Behandlung der Proben am jeweiligen Laborgerät bestehen. Zu diesen Rahmenbedingungen gehört die Frage, ob ein zur Bearbeitung der Teilaufgabe zu einem bestimmten Zeitpunkt erforderliches Laborgerät verfügbar ist. Ferner wird eine bestimmte Menge an Verbrauchsmaterial bereitgehalten werden müssen, damit eine Behandlung jeweils ohne Verzögerung ablaufen kann. Der Laborant muss zudem flexibel reagieren, wenn bei einer Teilaufgabe unvorhergesehene Ereignisse stattfinden, z.B. ein Probenverlust oder ein Verfügungsengpass bei Laborressourcen, z.B. Laborgeräten oder Verbrauchsmaterial. Dazu benötigt er die entsprechende Information, um z.B. die bei einer nachfolgenden Behandlung beim nächsten Laborgerät geeigneten Anpassungen vornehmen zu können. Die genannten Schritte sind komplex und führen in der Praxis zu Verzögerungen bei Laborarbeiten, durch die die Effizienz des Arbeitsflusses (Workflow) gemindert wird.

Es ist Aufgabe der vorliegenden Erfindung, den Workflow bei einer gerätegesteuerten Bearbeitung einer Aufgabe oder Teilaufgabe bei einem Behandlungsprozess zu verbessern, der Behandlungen mindestens einer Laborprobe beinhaltet.

Die Erfindung löst diese Aufgabe insbesondere durch das System gemäß Anspruch 1, das Laborgerät gemäß Anspruch 7 und die Verfahren nach Ansprüchen 8 und 9. Bevorzugte Ausgestaltungen sind insbesondere Gegenstände der Unteransprüche.

Das erfindungsgemäße Laborgerät dient der gerätegesteuerten Bearbeitung einer Teilaufgabe bei einem Behandlungsprozess zur Bearbeitung mindestens einer Laborprobe, der die Bearbeitung einer Teilaufgaben aufweisenden Aufgabe bei der Bearbeitung der mindestens einen Laborprobe unter Verwendung des Laborgeräts und mindestens eines weiteren Laborgeräts betrifft. Das erfindungsgemäße Laborgerät weist insbesondere auf:
- eine Behandlungseinrichtung zur gerätegesteuerten Bearbeitung der Teilaufgabe,
- eine Steuereinrichtung zur Steuerung des Laborgeräts,
- mindestens eine Schnittstelleneinrichtung, zur Herstellung mindestens einer Datenverbindung mit mindestens einem weiteren Laborgerät;
wobei die Steuereinrichtung dazu eingerichtet ist,
- über die mindestens eine Schnittstelleneinrichtung erste Behandlungsdaten zu empfangen, die zur Bearbeitung der Teilaufgabe verwendbar sind, und
- die Steuerung der Bearbeitung der Teilaufgabe unter Verwendung dieser ersten Behandlungsdaten durchzuführen,
- zweite Behandlungsdaten in Abhängigkeit von der Bearbeitung der Teilaufgabe bereitzustellen, insbesondere zu erzeugen, die zur Bearbeitung einer weiteren Teilaufgabe des Behandlungsprozesses von dem weiteren Laborgerät verwendbar sind, und
- über die mindestens eine Schnittstelleneinrichtung wenigstens diese weiteren Behandlungsdaten zur Verwendung durch das weitere Laborgerät auszugeben.

Die "weiteren Behandlungsdaten" werden nachfolgend auch als "zweite Behandlungsdaten" bezeichnet.

Das erfindungsgemäße Laborgerät bietet den Vorteil, dass es zweite Behandlungsdaten bereitstellt, die bei Durchführung der Behandlung auf dem Laborgerät anfallen. Diese zweiten Daten repräsentieren insbesondere Informationen, die zur Durchführung einer weiteren Behandlung auf einem weiteren Laborgerät im Rahmen der Durchführung des Behandlungsprozesses erforderlich sind. Dadurch gelingt die Durchführung der weiteren Behandlung in effizienterer Weise, insbesondere wenn ein System mit mehreren solcher Laborgeräte zur Durchführung einer komplexen Aufgabe eingesetzt wird. Die erfindungsgemäße Gestaltung des Laborgeräts ermöglicht es, dieses in einem erfindungsgemäße System einzusetzen, das aufgebaut ist wie folgt:
Das erfindungsgemäße System dient der gerätegesteuerten Bearbeitung einer Aufgabe durch einen Behandlungsprozess zur Bearbeitung mindestens einer Laborprobe, wobei die Aufgabe die Bearbeitung von mindestens einer ersten und einer zweiten Teilaufgabe beinhaltet, wobei das System aufweist:
   - mindestens ein erstes erfindungsgemäßes Laborgerät zur Bearbeitung der ersten Teilaufgabe der Aufgabe, und
   - mindestens ein zweites erfindungsgemäßes Laborgerät zur Bearbeitung der zweiten Teilaufgabe der Aufgabe,
   wobei das erste Laborgerät dazu ausgebildet ist,
   - die Steuerung der Bearbeitung der Teilaufgabe unter Verwendung von ersten Behandlungsdaten durchzuführen,
   wobei das System dazu eingerichtet ist,
   - zweite Behandlungsdaten in Abhängigkeit von der Bearbeitung der ersten Teilaufgabe bereitzustellen, insbesondere zu erzeugen, die zur Bearbeitung der zweiten Teilaufgabe des Behandlungsprozesses von dem zweiten Laborgerät verwendbar sind, und
   - über die mindestens eine Schnittstelleneinrichtung wenigstens diese zweiten Behandlungsdaten zur Verwendung durch das mindestens eine zweite Laborgerät auszugeben,
   wobei das zweite Laborgerät dazu ausgebildet ist,
   - über die mindestens eine Schnittstelleneinrichtung zweite Behandlungsdaten zu empfangen, die zur Bearbeitung der zweiten Teilaufgabe verwendbar sind, und
   - die Steuerung der programmgesteuerten Bearbeitung der zweiten Teilaufgabe unter Verwendung von zweiten Behandlungsdaten durchzuführen.

Der Begriff "Behandlung" bedeutet, dass eine Laborprobe, die zumeist flüssig ist, bewegt, transportiert, und/oder untersucht und/oder verändert wird, insbesondere in ihrer Zusammensetzung, physikalisch, chemisch, biochemisch oder auf andere Weise verändert wird.

Behandlungsdaten, insbesondere die ersten und/oder die zweiten **Behandlungsdaten,** enthalten vorzugsweise jeweils Prozessdaten. Der Begriff "Prozess" bezeichnet den Behandlungsprozess. Prozessdaten enthalten insbesondere Informationen, die zur Durchführung des Behandlungsprozesses, bzw. zur Durchführung mindestens einer Behandlung des Behandlungsprozesses essentiell notwendig sind. Solche Prozessdaten können sich während dem Behandlungsprozess und/oder während einer individuellen Behandlung des Behandlungsprozesses ändern. Zum Beispiel kann bei einer Messung von Proben auf einem ersten Laborgerät eine Stoffkonzentration ermittelt werden, z.B. wenn dieses erste Laborgerät ein Biospektrometer ist. Aufgrund der Stoffkonzentration kann eine bestimmte Verdünnungsreihe erforderlich werden, die im weiteren Behandlungsschritt auf einem weiteren Laborgerät, z.B. einem Pipettierautomaten, eine bestimmte Verdünnungsreihe erfordert. Die Information über die Konzentration wird erst auf dem ersten Laborgerät erzeugt, so dass die weitere Vorgehensweise grundsätzlich erst ab diesem Zeitpunkt geplant werden kann. Die Prozessdaten können dann entweder Informationen über die Stoffkonzentration und/oder die gewünschten Zielkonzentration(en) enthalten oder die Informationen zur Definition einer Verdünnungsreihe. Jedenfalls kann das weitere Laborgerät in diesem Beispiel hier der weitere Laborautomat (Pipettierautomat) ohne Verzögerung mit der gewünschten Verdünnungsreihe beginnen. Insbesondere in diesem Zusammenhang ist es besonders vorteilhaft, wenn Prozessdaten mit solchen für die weitere Behandlung essentiellen Informationen vom Laborgerät als zweite Behandlungsdaten bereitgestellt werden, um auf dem nachfolgenden, d.h. "weiteren" oder "zweiten" Laborgerät verwendet zu werden, ohne dass es zu einer Verzögerung bei der Bereitstellung der Daten kommt.

Die **ersten und/oder die zweiten Behandlungsdaten** können jeweils Zeitdaten enthalten, die Informationen über den geplanten Beginn und/oder das Ende einer Behandlung, enthalten. Die Zeitdaten können Informationen über absolute Zeitpunkte enthalten, oder über relative Zeitpunkte und/oder Zeitperioden.

Die **ersten und/oder die zweiten Behandlungsdaten** können jeweils Probendaten enthalten. Die Probendaten können Informationen über die Anzahl von zu behandelnden Laborproben enthalten, die Art der zu behandelnden Laborproben, die Menge individueller Laborproben oder die Gesamtmenge der Laborproben oder einer Kategorie der Laborproben. Die Probendaten können Informationen über Laborbehälter mit Proben enthalten, insbesondere über die Probenröhrchen oder Mikrotiterplatten, insbesondere deren Füllstatus oder Belegungsstatus und deren Größe. Die Probendaten können Informationen über Behandlungsvorschriften für die Laborproben oder individuelle Laborproben enthalten, z.B. Informationen über einzuhaltende Probentemperaturen, Inkubationszeiten oder Verarbeitungszeiten, oder **Daten zur Individualisierung der Proben, z.B. mit dem Ziel einer eindeutigen Patientenzuordnung der Proben.**

Die **ersten und/oder die zweiten Behandlungsdaten** können jeweils Verbrauchsgutdaten enthalten. Die Verbrauchsgutdaten können Informationen über verwendetes oder bei einer bestimmten Behandlung benötigtes Verbrauchsgut enthalten, z.B. Laborbehälter, insbesondere Probenröhrchen oder Mikrotiterplatten, oder z.B. Transportbehälter, insbesondere Pipettenspitzen oder Dispenserspitzen. Die Verbrauchsgutdaten können Informationen über Lösungsmittel, Nährmedien, Reinigungsflüssigkeit, Puffer oder andere nicht-feste Verbrauchsmaterialien enthalten, die während einer individuellen Behandlung erwartet werden.

Die **ersten und/oder die zweiten Behandlungsdaten** können jeweils Benutzerdaten enthalten. Die Benutzerdaten können Informationen zu dem Benutzer enthalten, der einen Behandlungsprozess gestartet hat, insbesondere Identifizierungsdaten oder einen Identifikationscode, mit dem der Benutzer eindeutig identifizierbar ist. Die Benutzerdaten können Informationen über die Rolle oder Gruppenzugehörigkeit eines Benutzers enthalten. Die Benutzerdaten können Informationen über Berechtigungen und/oder Zugriffsrechte des Benutzers enthalten.

Die **ersten und/oder die zweiten Behandlungsdaten** können jeweils Programmdaten enthalten, insbesondere Programmparameter oder Informationen darüber enthalten.

Die gerätegesteuerte Behandlung bei einem Laborgerät erfolgt vorzugsweise unter Verwendung mindestens eines Programmparameters. Vorzugsweise ist die von der Behandlungseinrichtung eines Laborgeräts durchgeführte Behandlung eine programmgesteuerte Behandlung. Vorzugsweise erfolgt die programmgesteuerte Behandlung unter Verwendung mindestens eines Programmparameters. Dieser kann ein Benutzerparameter sein. Der mindestens eine Programmparameter kann Bestandteil der ersten und/oder der zweiten Behandlungsdaten sein oder kann von der Steuereinrichtung eines Laborgeräts eindeutig aus den ersten und/oder der zweiten Behandlungsdaten zu ermitteln sein.

Vorzugsweise weist das System mindestens ein externes Datenverarbeitungsgerät auf, das auch als Datenverarbeitungseinrichtung bezeichnet wird und das insbesondere ein Computer sein kann oder einen Computer aufweisen kann. Das externe Datenverarbeitungsgerät kann insbesondere ein Server sein. Ein Server ist insbesondere ein Computer, dessen Hardware vorzugsweise auf Serveranwendungen abgestimmt ist.

Das externe Datenverarbeitungsgerät weist jeweils vorzugsweise auf: mindestens eine Speichereinrichtung zum flüchtigen und/oder dauerhaften Speichern von Daten; mindestens eine Steuereinrichtung; mindestens eine Kommunikationseinrichtung; mindestens eine Schnittstelleneinrichtung.

Eine **Steuereinrichtung** weist im Rahmen der vorliegenden Erfindung generell insbesondere eine Datenverarbeitungseinrichtung, insbesondere eine Recheneinheit (CPU) zum Verarbeiten von Daten auf. Die Recheneinheit ist vorzugsweise auch zum Steuern des externen Datenverarbeitungsgerätes und/oder des Behandlungsprozesses und/oder der individuellen Behandlungen eingerichtet.

Eine **Kommunikationseinrichtung** ist vorzugsweise eingerichtet für das Senden und/oder Empfangen von Daten, insbesondere den Datenaustausch, über eine durch die Kommunikationseinrichtung bereitgestellte Datenfernverbindung mit einem entfernten Gerät, das auch bezeichnet wird als "Remote-Gerät". Die Datenfernverbindung kann durch ein beschränktes (insbesondere ein Intranet) oder weltweites (insbesondere das Internet) Netzwerk aus Computern aufgebaut werden. Die Datenfernverbindung kann auch über eine Funkverbindung aufgebaut werden. Die Datenfernverbindung kann insbesondere über eine Mobilfunkverbindung aufgebaut werden.

Vorzugsweise weist in einer ersten bevorzugten Gestaltung des erfindungsgemäßen Systems die mindestens eine externe Datenverarbeitungseinrichtung mindestens eine Speichereinrichtung auf, in der erste und/oder zweite Behandlungsdaten speicherbar sind, die zur Durchführung des Behandlungsprozesses verwendet werden.

Vorzugsweise ist in einer zweiten bevorzugten Gestaltung des erfindungsgemäßen Systems, das insbesondere die erste Gestaltung aufweisen kann, die mindestens eine externe Datenverarbeitungseinrichtung dazu eingerichtet, erste und/oder zweite Behandlungsdaten mindestens eines Laborgeräts des Systems während des Behandlungsprozesses zu verarbeiten, insbesondere Behandlungsdaten vom ersten Laborgerät zu empfangen und Behandlungsdaten an das zweite Laborgerät zu senden.

Vorzugsweise weist in einer dritten bevorzugten Gestaltung des erfindungsgemäßen Systems, das insbesondere die erste oder zweite Gestaltung aufweisen kann, das System mindestens eine Benutzerschnittstelleneinrichtung auf, mit der Behandlungsdaten, insbesondere erste und/oder zweite Behandlungsdaten, von einem Benutzer bestimmt werden können. Die Benutzerschnittstelleneinrichtung ist vorzugsweise dazu ausgebildet, die Behandlungsdaten an mindestens ein Laborgerät auszugeben, insbesondere mindestens ein externes Datenverarbeitungsgerät.

Vorzugsweise ist in einer vierten bevorzugten Gestaltung des erfindungsgemäßen Systems, das insbesondere die erste, zweite oder dritte Gestaltung aufweisen kann, mindestens ein erstes Laborgerät dazu eingerichtet, bei der Bearbeitung einer Teilaufgabe mindestens einen ersten Datensatz zu erzeugen, der insbesondere Informationen über die Durchführung der Behandlung gemäß der ersten Teilaufgabe enthält, insbesondere Protokolldaten oder Verbrauchsmaterial-bezogene Daten, und diesen Datensatz über die mindestens eine Schnittstelleneinrichtung auszugeben, insbesondere an das mindestens eine zweite Laborgerät oder ein externes Datenverarbeitungsgerät. Weiterhin das System ist vorzugsweise dazu eingerichtet, den mindestens einen ersten Datensatz in einer Datenbank zu sammeln und zu speichern.

Vorzugsweise weist in einer fünften bevorzugten Gestaltung des erfindungsgemäßen Systems, das insbesondere die erste, zweite, dritte oder vierte Gestaltung aufweisen kann, das System mindestens eine systemzugehörige Datenverarbeitungseinrichtung, insbesondere einen Computer auf, der dazu eingerichtet ist, Behandlungsdaten zu empfangen und/oder zu senden und/oder zu speichern. Vorzugsweise ist dieser Computer dazu ausgebildet, Protokolldaten über einen Prozess zu sammeln. Vorzugsweise ist der Computer ein dedizierter Server, der insbesondere kein Laborgerät mit einer Behandlungseinrichtung ist, wie im Rahmen dieser Beschreibung definiert ist. Es ist aber auch möglich, dass ein Laborgerät derart ausgestaltet ist, dass es die Funktionen des Servers übernimmt, wobei ein solcher Server kein dedizierter Server ist.

Die Protokolldaten beinhalten vorzugsweise mindestens erste und/oder zweite Behandlungsdaten, vorzugsweise alle ersten und/oder zweiten Behandlungsdaten, die von mindestens einem, mehreren oder allen Laborgeräten des Systems im Verlauf des Behandlungsprozesses bereitgestellt und/oder erzeugt werden. Auf diese Weise kann ein elektronisches Laborbuch erstellt werden, mit dem die einzelnen Behandlungen des Behandlungsprozesses als Datei zusammengestellt und gespeichert werden, insbesondere in Abhängigkeit von Benutzerdaten, insbesondere der Identität des die Behandlungen bzw. den Behandlungsprozess durchführenden Benutzers. Dieses Laborbuch ist hilfreich für die Qualitätskontrolle in einem Labor. Es gibt Fälle, in denen die Erstellung eines Laborbuchs auch essentiell ist, um die durchgeführten Behandlungen bzw. den durchgeführten Behandlungsprozess nachweisen zu können. Durch das elektronische Laborbuch wird die Effizienz eines Labors erheblich gesteigert.

Vorzugsweise beinhalten die Protokolldaten alle Behandlungsdaten, die erforderlich sind, um den Behandlungsprozess mit dem System eindeutig reproduzieren zu können. Aus solchen Behandlungsdaten kann eine Zertifizierungsdatei für den Behandlungsprozess erstellt werden. Mithilfe der Zertifizierungsdatei kann der Behandlungsprozess wiederholt und/oder verifiziert werden.

Vorzugsweise weist das System einen Computer, insbesondere einen Server auf, der eine Reservierungsdatenbank aufweist. Diese kann einen Kalender aufweisen, in dem Einträge der zeitlichen Nutzung eines oder mehrerer Laborgeräten mit einer bestimmten zeitlichen Genauigkeit eingetragen werden können, z.B. mit minutengenauer Belegung. Vorzugsweise ist das System dazu eingerichtet, die Verwendung eines, mehrerer oder aller Laborgeräte des Systems mittels der Reservierungsdatenbank zu verwalten. Vorzugsweise ist der Computer dazu eingerichtet, unter Berücksichtigung der in der Reservierungsdatenbank enthaltenen Information(en) über die zeitliche Reservierung eines oder mehrerer für einen Behandlungsprozess notwendigen Laborgeräte eine zeitliche Reservierung der für den Behandlungsprozess notwendigen Laborgeräte festzulegen und diese Reservierung insbesondere in der Reservierungsdatenbank einzutragen. Die Einträge in der Reservierungsdatenbank können demnach einerseits durch den Computer erfolgt sein oder andererseits durch einen oder mehrere Benutzer eingetragen worden sein. Dadurch wird die Effizienz in einem Labor weiter gesteigert.

Vorzugsweise ist der Computer dazu eingerichtet, Benutzerdaten zu empfangen, die ein Benutzer, insbesondere mithilfe eines externen Datenverarbeitungsgeräts, insbesondere über eine Kommunikationseinrichtung des Computers oder über eine Schnittstelleneinrichtung des Computers an den Computer überträgt. Vorzugsweise ist der Computer dazu eingerichtet, aus diesen Benutzerdaten den Behandlungsprozess zu definieren. Dabei wird vorzugsweise festgelegt, welche Laborgeräte zur Durchführung des vom Benutzer gewünschten Behandlungsprozesses erforderlich sind, in welcher Weise die Behandlungen durchgeführt werden, insbesondere abhängig von der Rolle, Qualifikation oder Gruppenzugehörigkeit des Benutzers und insbesondere unter Berücksichtigung der Reservierungen der für diesen Behandlungsprozess erforderlichen Laborgeräte. Der Behandlungsprozess kann aber auch bereits geplant sein und in Form einer Einstellungsdatei vorliegen, die den Behandlungsprozess ausreichend, insbesondere eindeutig definiert. Der Computer plant und/oder verwaltet und/oder steuert vorzugsweise den gesamten Behandlungsprozess oder Teile davon.

Es ist bevorzugt, dass das Laborgerät die bereitgestellten und/oder erzeugten Behandlungsdaten, insbesondere die "weiteren" oder "zweiten" Behandlungsdaten, direkt an den Computer, insbesondere Server, überträgt, also über eine direkte drahtlose oder drahtgebundene Datenverbindung an den Computer, insbesondere Server, überträgt. Es ist auch bevorzugt, dass das Laborgerät die bereitgestellten und/oder erzeugten Behandlungsdaten, insbesondere die "weiteren" oder "zweiten" Behandlungsdaten, indirekt, also mittelbar, an den Computer, insbesondere Server, überträgt, also über eine mittelbare drahtlose oder drahtgebundene Datenverbindung an den Computer, insbesondere Server, überträgt. Dabei kann mindestens ein weiteres Datenverarbeitungsgerät zwischengeschaltet sein, das die Behandlungsdaten empfängt und weitersendet. Dieses Datenverarbeitungsgerät kann ein Laborgerät bzw. dessen Steuereinrichtung sein, oder ein anderer Computer.

Es ist auch möglich und bevorzugt, dass das System keinen Computer, insbesondere keinen Server aufweist.

Vorzugsweise sind die Laborgeräte eines Systems miteinander vernetzt, d.h. dass jedes Laborgerät dazu eingerichtet ist, mit mindestens einem anderen Laborgerät des Systems eine Datenverbindung aufzubauen. Diese kann drahtlos oder drahtgebunden sein. Das Netzwerk kann eine serielle Anordnung der Laborgeräte aufweisen, die logisch hintereinander angeordnet sind und während eines Behandlungsprozesses vorzugsweise in dieser Reihenfolge, oder aber einer anderen Reihenfolge, zum Einsatz kommen. Die Anordnung kann kettenförmig sein, kann aber auch ringförmig oder sternförmig sein oder anders vernetzt sein.

Vorzugsweise ist ein erstes Laborgerät des Systems dazu ausgebildet, Benutzerdaten zu empfangen, die ein Benutzer, insbesondere mithilfe eines externen Datenverarbeitungsgeräts, insbesondere über eine optionale Kommunikationseinrichtung des Laborgeräts oder über eine Schnittstelleneinrichtung des Laborgeräts an das Laborgerät überträgt. Vorzugsweise ist das Laborgerät, oder das System, dazu eingerichtet, aus diesen Benutzerdaten den Behandlungsprozess zu definieren. Dabei wird vorzugsweise festgelegt, welche Laborgeräte zur Durchführung des vom Benutzer gewünschten Behandlungsprozesses erforderlich sind, und/oder in welcher Weise die Behandlungen durchgeführt werden, insbesondere abhängig von der Rolle, Qualifikation oder Gruppenzugehörigkeit des Benutzers und/oder insbesondere unter Berücksichtigung der Reservierungen der für diesen Behandlungsprozess erforderlichen Laborgeräte. Der Behandlungsprozess kann aber auch bereits geplant sein und in Form einer Einstellungsdatei vorliegen, die den Behandlungsprozess ausreichend, insbesondere eindeutig definiert. Die Laborgeräte eines Systems, insbesondere eines Systems, das keinen Server oder keinen dedizierten Server aufweist, sind vorzugsweise dazu eingerichtet, den Behandlungsprozess zu planen und/oder zu verwalten und/oder zu steuern. Jedes Laborgerät ist vorzugsweise dazu ausgebildet, die zur Durchführung der im weiteren Behandlungsschritt erforderlichen Behandlungsdaten, insbesondere Parameter und/oder Prozessdaten zu empfangen, gegebenenfalls zu bündeln und/oder weiterzusenden, insbesondere an ein weiteres Laborgerät und/oder ein externes Datenverarbeitungsgerät. Auch in diesem System lässt sich ein elektronisches Laborbuch, eine Protokolldatei oder eine Zertifizierungsdatei erstellen und insbesondere am Ende eines Behandlungsprozesses für die weitere Nutzung bereitstellen.

Die Erfindung betrifft zudem ein **Verfahren** zur gerätegesteuerten Bearbeitung einer Teilaufgabe bei einem Behandlungsprozess zur Bearbeitung mindestens einer Laborprobe, der die Bearbeitung einer Teilaufgaben aufweisenden Aufgabe bei der Bearbeitung der mindestens einen Laborprobe unter Verwendung des erfindungsgemäßen Laborgeräts betrifft, und mittels der Steuereinrichtung des Laborgeräts folgende Schritte des Verfahrens ausführt:
- Empfangen erster Behandlungsdaten, die zur Bearbeitung der Teilaufgabe verwendbar sind, über die mindestens eine Schnittstelleneinrichtung des Laborgeräts, und
- Steuerung der Bearbeitung der Teilaufgabe unter Verwendung dieser ersten Behandlungsdaten,
- Bereitstellung, insbesondere Erzeugung, weiterer Behandlungsdaten in Abhängigkeit von der Bearbeitung der Teilaufgabe, wobei die weiteren Behandlungsdaten zur Bearbeitung einer weiteren Teilaufgabe des Behandlungsprozesses von einem weiteren Laborgerät verwendbar sind, und
- Ausgabe wenigstens dieser weiteren Behandlungsdaten über die mindestens eine Schnittstelleneinrichtung zur Verwendung durch das weitere Laborgerät.

Die Erfindung betrifft ferner das **Verfahren** zur gerätegesteuerten Bearbeitung einer Aufgabe durch einen Behandlungsprozess zur Bearbeitung mindestens einer Laborprobe, wobei die Aufgabe die Bearbeitung von mindestens einer ersten und einer zweiten Teilaufgabe unter Verwendung des erfindungsgemäßen Systems beinhaltet, wobei das Verfahren die Schritte aufweist:
- Steuerung der Bearbeitung der ersten Teilaufgabe unter Verwendung von ersten Behandlungsdaten durch den ersten Laborautomaten,
- Bereitstellung, insbesondere Erzeugung, zweiter Behandlungsdaten, insbesondere in Abhängigkeit von der Bearbeitung der ersten Teilaufgabe, wobei die zweiten Behandlungsdaten zur Bearbeitung der zweiten Teilaufgabe des Behandlungsprozesses von dem zweiten Laborgerät verwendbar sind,
- Ausgabe wenigstens dieser zweiten Behandlungsdaten zur Verwendung durch das mindestens eine zweite Laborgerät,
- Empfang dieser zweiten Behandlungsdaten über die mindestens eine Schnittstelleneinrichtung bei dem zweiten Laborgerät, und
- Steuerung der Bearbeitung der zweiten Teilaufgabe unter Verwendung dieser zweiten Behandlungsdaten durch das zweite Laborgerät.

Vorzugsweise weist das Laborgerät eine Zugriffssteuerung auf, um einen oder mehrere Benutzer am Laborgerät zu authentifizieren und/oder zu autorisieren. Dadurch kann das System insbesondere erkennen, ob ein Laborgerät im Rahmen eines durchzuführenden Behandlungsprozesses von einem Benutzer verwendet wird, der auch den Behandlungsprozess initiiert hat.

Die Zugriffssteuerung erlaubt es vorzugsweise bei einem Laborgerät, den Zugriff eines oder mehrerer weiterer Benutzer am Laborgerät zu steuern, während ein erster Benutzer bereits angemeldet ist und dessen Sitzung am Laborgerät noch läuft, also während des Zugriffs der weiteren Benutzer noch aktiv ist. Durch diese Ausgestaltung lässt sich das Laborgerät effizienter nutzen und die Produktivität des Labors verbessern.

Die **Zugriffssteuerung** ist eine zur Datenverarbeitung ausgebildete Einrichtung, die vorliegend auch als "access control device" bezeichnet wird. Sie dient der Zugriffskontrolle (englisch: "access control"). Die Zugriffssteuerung weist eine Steuereinrichtung auf. Die Steuereinrichtung ist zur Datenverarbeitung ausgebildet. Die Steuereinrichtung ist insbesondere eine elektronische Steuereinrichtung. Sie weist vorzugsweise eine Datenverarbeitungseinrichtung auf, die insbesondere elektronisch ist. Die Zugriffssteuerung weist vorzugsweise mindestens eine Schnittstelleneinrichtung auf, mit der die Steuereinrichtung mindestens eine erste Datenverbindung mit einer Benutzerschnittstelleneinrichtung herstellen kann und vorzugsweise mindestens eine zweite Datenverbindung mit einer Schnittstelleneinrichtung des Laborgeräts oder einer externen Datenverarbeitungseinrichtung herstellen kann.

Eine **Schnittstelleneinrichtung** dient der Verbindung von zwei Einrichtungen, die jeweils Signale, insbesondere Informationen, insbesondere Daten, verarbeiten können, insbesondere senden und/oder empfangen können. Eine Schnittstelleneinrichtung kann mindestens eine Hardwareschnittstelle beinhalten und/oder mindestens eine Softwareschnittstelle.

**Hardwareschnittstellen** sind insbesondere Schnittstellen zwischen elektrisch arbeitenden Einheiten, gemäß dem üblichen Verständnis in der Elektrotechnik und Elektronik. Vorliegend bezeichnet der Begriff "Hardwareschnittstelle" insbesondere auch die Verbindungskomponenten zwischen wenigstens zwei elektrisch arbeitenden Einheiten selbst, also insbesondere alle Bestandteil, die diese Verbindung ermöglichen, z.B. integrierte Schaltkreise, Elektronik und Leitungen, über die zwischen den wenigstens zwei elektrisch arbeitenden Einheiten elektrische Signale versandt werden. Diese zwei elektrisch arbeitenden Einheiten können insbesondere ein Laborgerät und eine externe Datenverarbeitungseinrichtung sein, oder zwei Laborgeräte, oder zwei elektrisch arbeitenden Einheiten innerhalb eines Laborgeräts. Eine Hardwareschnittstelle muss nicht, aber kann eine lösbare Verbindungseinrichtung zum Lösen und/oder Wiederherstellen dieser Verbindung aufweisen, insbesondere mindestens einen Stecker.

**Softwareschnittstellen,** insbesondere softwareseitige Datenschnittstellen, sind insbesondere logische Berührungspunkte in einem Informationsverwaltungssystem, insbesondere Softwaresystem: Sie ermöglichen und regeln den Austausch von Kommandos und Daten zwischen verschiedenen Prozessen und Komponenten. Softwareschnittstellen können nur zur Kommunikation benutzte, datenorientierte Schnittstellen sein. In diesem Fall enthält die Softwareschnittstelle lediglich die Informationen, die zwischen beteiligten Systemteilen ausgetauscht werden.

Eine **Steuereinrichtung** weist im Rahmen der vorliegenden Erfindung generell insbesondere eine Datenverarbeitungseinrichtung, insbesondere eine Recheneinheit (CPU) zum Verarbeiten von Daten und/oder einen Mikroprozessor auf oder ist eine Datenverarbeitungseinrichtung. Die Recheneinheit der Steuereinrichtung eines Laborgeräts ist vorzugsweise auch zum Steuern des Behandlungsprozesses und/oder der individuellen Behandlungen eingerichtet.

Die Steuereinrichtung des Laborgeräts und/oder die optionale Zugriffssteuerung und/oder die optionale Benutzerschnittstelleneinrichtung können -insbesondere alle- in einer physikalischen Geräteinheit integriert sein, können aber jeweils auch eine eigene physikalische Geräteinheit sein. Eine physikalische Geräteinheit kann insbesondere ein Modul sein, das mit dem Laborgerät verbunden ist oder verbindbar ist. Die Steuereinrichtung des Laborgeräts und/oder die optionale Zugriffssteuerung und/oder die optionale Benutzerschnittstelleneinrichtung oder Bestandteile dieser Komponenten können auch durch Softwarefunktionen implementiert sein, oder können insbesondere als Programmcode vorliegen. Ein Laborgerät kann z.B. einen Computer aufweisen, der in Kombination mit Softwarefunktionen die Steuereinrichtung des Laborgeräts und/oder die optionale Zugriffssteuerung und/oder die optionale Benutzerschnittstelleneinrichtung jeweils zumindest teilweise implementiert. Ist z.B. die Zugriffssteuerung in das Laborgerät integriert, kann die Zugriffssteuerung selber Teil der Steuereinrichtung des Laborgeräts sein bzw. mittels der Steuereinrichtung implementiert sein, insbesondere durch Softwarefunktionen, insbesondere zumindest teilweise als ausführbarer Programmcode.

Ein Modul kann insbesondere die Zugriffssteuerung und/oder eine Benutzerschnittstelleneinrichtung aufweisen. Ein Modul ist ein von anderen Geräten getrenntes, und/oder ein vom anderen Gerät, insbesondere Laborgerät, abtrennbares Gerät. Ein Laborgerät kann eine Verbindungseinrichtung aufweisen, durch die das Modul mit dem Laborgerät verbindbar ist, insbesondere mittels einer vom Benutzer lösbaren Verbindung. Ein Modul kann portabel sein, also von einem Benutzer transportierbar. Das Modul kann auch fest mit dem Laborgerät verbunden sein. Die modulare Bauweise bietet Vorteile bei der Herstellung von Laborgeräten. Ein portables Modul bietet eine größere Flexibilität bei der Benutzung eines Laborgeräts.

Eine **Kommunikationseinrichtung** ist vorzugsweise eingerichtet für das Senden und/oder Empfangen von Daten, insbesondere den Datenaustausch, über eine durch die Kommunikationseinrichtung bereitgestellte Datenverbindung, insbesondere eine Datenfernverbindung mit einem entfernten Gerät. Insbesondere wird das bezüglich eines Laborgeräts entfernt angeordnete Gerät auch bezeichnet als "Remote-Gerät" oder externes Gerät. Insbesondere wird eine Datenverarbeitungseinrichtung, die nicht Bestandteil eines Laborgeräts ist, auch als externe Datenverarbeitungseinrichtung bezeichnet. Die Datenverbindung, insbesondere Datenfernverbindung, kann über ein beschränktes (insbesondere ein Intranet) oder weltweites (insbesondere das Internet) Netzwerk aus Computern aufgebaut werden. Die Datenverbindung, insbesondere Datenfernverbindung, kann auch über eine Funkverbindung aufgebaut werden. Die Datenverbindung, insbesondere Datenfernverbindung, kann insbesondere über eine Mobilfunkverbindung aufgebaut werden.

Eine Datenverbindung verbindet insbesondere zwei datenverarbeitende Einheiten, insbesondere zwei Datenverarbeitungseinrichtungen, in der Weise, dass Daten zwischen den Einheiten ausgetauscht werden können, entweder unidirektional oder bidirektional. Die Datenverbindung kann leitungsgebunden realisiert sein, oder drahtlos, insbesondere als Funkverbindung. Eine Datenfernverbindung verbindet insbesondere zwei datenverarbeitende Einheiten, insbesondere zwei Datenverarbeitungseinrichtungen, die entfernt voneinander angeordnet sind, die also insbesondere nicht Bestandteil desselben Geräts, insbesondere derselben Zugriffssteuerung, Benutzerschnittstelleneinrichtung oder desselben Laborgeräts sind, falls die genannten Geräte als separate Geräte ausgeführt sind. Eine Datenverbindung, insbesondere eine Datenfernverbindung, eines Geräts mit einem anderen Gerät wird vorzugsweise über eine direkte Verbindung der beiden Geräte realisiert, oder eine mittelbare Verbindung der beiden Geräte, so dass ein drittes Gerät zwischen die beiden Geräte geschaltet ist, um die Daten weiterzuvermitteln. Eine Datenfernverbindung kann insbesondere über ein Netzwerk aus Computern realisiert sein, bei denen die über die Datenfernverbindung verbundenen Geräte über das Netzwerk verbunden sind. Das Netzwerk kann ein beschränktes Netzwerk sein, z.B. ein Intranet, oder kann ein weltweites Netzwerk sein, insbesondere das Internet.

Eine **Datenverarbeitungseinrichtung** weist vorzugsweise eine Recheneinheit auf, insbesondere eine CPU, ferner vorzugsweise mindestens eine Datenspeichereinrichtung, insbesondere zur zeitweisen und/oder dauerhaften Speicherung von Daten.

Jeder Benutzer kann über dieselbe **Benutzerschnittstelleneinrichtung** in eine erste Datenverbindung mit der Zugriffssteuerung treten, oder mehrere Benutzer können über unterschiedliche Benutzerschnittstelleneinrichtungen in eine erste Datenverbindung mit der Zugriffssteuerung treten. Eine Benutzerschnittstelleneinrichtung kann Bestandteil der Zugriffssteuerung sein. Eine Zugriffssteuerung kann Bestandteil der Benutzerschnittstelleneinrichtung sein. Eine Benutzerschnittstelleneinrichtung kann Bestandteil eines Laborgeräts sein. Eine Benutzerschnittstelleneinrichtung weist jeweils vorzugsweise auf: eine Steuereinrichtung für eine Benutzerschnittstelleneinrichtung; eine Kommunikationseinrichtung zur Herstellung einer Datenverbindung mit einem Laborgerät über eine Schnittstelleneinrichtung desselben; eine Eingabeeinrichtung zur Erfassung von Benutzereingaben eines Benutzers; eine Ausgabeeinrichtung, insbesondere eine Anzeige und/oder ein Display, zur Ausgabe von Informationen an den Benutzer. Dabei ist die Steuereinrichtung der Benutzerschnittstelleneinrichtung vorzugsweise dazu eingerichtet, über die Datenverbindung Daten mit dem Laborgerät auszutauschen, die aus den Benutzereingaben gewonnen wurden, und die im erfindungsgemäßen Laborgerät bewirken, dass dem Benutzer am erfindungsgemäßen Laborgerät Berechtigungen und/oder Zugriffsrechte erteilt werden, wobei vorzugsweise ein gleichzeitiges Angemeldet-sein und/oder der gleichzeitige Zugriff eines ersten und wenigstens eines zweiten Benutzers am erfindungsgemäßen Laborgerät über die Schnittstelleneinrichtung mit jeweils zugewiesenen Zugriffsrechten auf Funktionen des Laborgeräts, steuerbar ist.

Die Zugriffssteuerung ist vorzugsweise dazu eingerichtet, die Zugriffsrechte zu steuern, indem die Steuereinrichtung eine Datenverbindung mit einer **Datenbank für Zugriffsrechte** verwendet. Die Datenbank für Zugriffsrechte ist vorzugsweise in mindestens einer, vorzugsweise in genau einer, Speichereinrichtung für Zugriffsrechte gespeichert. Die mindestens eine Speichereinrichtung für Zugriffsrechte kann in der Zugriffssteuerung angeordnet sein, und/oder kann in einer externen Datenverarbeitungseinrichtung angeordnet sein. Extern bedeutet, dass das Gerät, hier die Datenverarbeitungseinrichtung, nicht Bestandteil der in Rede stehenden Vorrichtung, hier der Zugriffssteuerung ist. Die Datenbank für Zugriffsrechte kann zentral gespeichert sein, kann aber auch in mehreren Speichereinrichtungen gespeichert sein, die jeweils Teile der Daten der Datenbank aufweisen können oder eine Kopie der Daten der Datenbank aufweisen können.

Eine **externe Datenverarbeitungseinrichtung** kann ein Server sein, der insbesondere zur Herstellung einer Datenverbindung zu mehr als einer Zugriffssteuerung und/oder mehr als einem Laborgerät eingerichtet ist. Eine externe Datenverarbeitungseinrichtung kann eine mobile Datenverarbeitungseinrichtung sein, die zur Herstellung einer drahtlosen Datenverbindung eingerichtet ist, insbesondere einer Datenverbindung über ein begrenztes oder weltweites Rechnernetz. Ein Rechnernetz ist ein Zusammenschluss verschiedener technischer, primär selbstständiger elektronischer Systeme (insbesondere Computer, aber auch Sensoren, Aktoren, Agenten und/oder sonstige funktechnische Komponenten usw.), der die Kommunikation der einzelnen Systeme untereinander ermöglicht.

Das Laborgerät, die Steuereinrichtung des Laborgeräts oder die Steuereinrichtung der optionalen Zugriffssteuerung kann eine **Kommunikationseinrichtung** zur Herstellung einer Datenverbindung mit einer externen Datenverarbeitungseinrichtung, insbesondere über eine Schnittstelleneinrichtung des Laborgeräts aufweisen. Die Zugriffssteuerung ist vorzugsweise dazu ausgebildet, die Zugriffsrechte unter Verwendung der Datenverbindung zu der externen Datenverarbeitungseinrichtung herzustellen, insbesondere über eine Schnittstelleneinrichtung der Zugriffssteuerung. Die externe Datenverarbeitungseinrichtung weist vorzugsweise die Datenbank für Zugriffsrechte zumindest teilweise oder vollständig auf.

Die Steuereinrichtung der Zugriffssteuerung ist dazu eingerichtet, Berechtigungen und/oder Zugriffsrechte für den Zugriff von Benutzern über die Benutzerschnittstelleneinrichtungen und die ersten und zweiten Datenverbindungen auf Funktionen des Laborgerätes zu steuern. Dadurch wird eine benutzerabhängige Nutzung des Laborgeräts möglich, die in Abhängigkeit von den jeweils vergebenen Zugriffsrechten gesteuert wird. Insbesondere wird eine gleichzeitige Nutzung des Laborgeräts durch mindestens einen ersten und mindestens einen zweiten Benutzer möglich.

Die Zugriffssteuerung ("access control device") führt die Zugriffskontrolle ("access control") aus. Der Begriff "Zugriffskontrolle" bezeichnet insbesondere Verfahren zur Verwaltung der Anfrage (englisch: "requests") nach Ressourcen und/oder Daten, die durch ein Informationsverwaltungssystem verwaltet werden, und Verwaltung der Entscheidungen, wie die Anfrage gehandhabt wird, insbesondere ob Zugriff gewährt wird oder nicht, und/oder in welcher Weise Zugriff gewährt wird oder nicht. Das Informationsverwaltungssystem kann insbesondere ein Betriebssystem sein, das auf der Zugriffssteuerung ausgeführt wird. Wenn der Benutzer eines Informationsverwaltungssystems eine bestimmte Operation auf einer bestimmten Ressource und/oder mit bestimmten Daten durchführen möchte, entscheidet die Zugriffskontrolle, ob diese Anfrage tatsächlich zugelassen oder abgelehnt werden soll. Eine Zugriffskontrollentscheidung (ja/nein) bezieht sich insbesondere auf ein Zugangssteuerungstriplett ("access control triple") bestehend aus "Subjekt", "Objekt" und "Operation".

Als Subjekt wird insbesondere eine aktive Entität eines Systems bezeichnet, die eine bestimmte Operation auf einem bestimmten Objekt durchführen möchte. Eine Entität bezeichnet in diesem Zusammenhang eine eindeutig bestimmbare Einheit, über das Informationen gespeichert und/oder verarbeitet werden sollen. Die Einheit kann materiell oder immateriell, konkret oder abstrakt sein. Subjekte sind insbesondere menschliche Benutzer eines Informationsverwaltungssystems oder Computerprogramme, die von menschlichen Nutzern zur Erfüllung von Aufgaben eingesetzt werden. Ein Subjekt kann auch eine Gruppe von Nutzern sein, z.B. Laborarbeiter, Servicetechniker, Administrator. Die Gruppe fasst demnach mehrere individuelle Subjekte zusammen.

Ein Benutzer kann ein Individuum repräsentieren, oder eine Gruppe von mehreren Individuen, oder eine Klasse von Individuen, die gemäß einer Klassenregel oder Rollenregel ausgewählt wurden.

Die Zugriffssteuerung kann vorzugsweise den mindestens einen ersten Benutzer und den mindestens einen zweiten Benutzer voneinander unterscheiden. Ein Benutzer wird von der Zugriffssteuerung vorzugsweise eindeutig identifiziert. Dazu verarbeitet die Zugriffssteuerung vorzugsweise Identifizierungsdaten. Vorzugsweise ist die Zugriffssteuerung dazu ausgebildet, den anfragenden Benutzer zu authentifizieren, das heißt, ein Nachweisverfahren durchzuführen, mit dem die **Authentizität** des anfragenden Benutzers überprüft wird und der Benutzer authentisiert wird, falls der Nachweis positiv ist. Authentifizierungsdaten enthalten zum Beispiel einen Logintext und einen Passworttext, oder einen Datensatz zur Gesichtserkennung oder zum Iris-Scan oder zum Fingerabdruckscan etc.. Die Authentifizierung kann ferner mittels RFID Chips oder NFC Chip, oder über Gestenerkennung erfolgen. Eine Authentifizierung kann insbesondere per Direktzugriff auf das Laborgerät bzw. dessen Zugriffssteuerung vor Ort erfolgen oder per Fernzugriff.

Die Zugriffssteuerung weist vorzugsweise ein **Informationsverwaltungssystem** auf, mit dem die Zugriffskontrolle realisiert wird. Das Informationsverwaltungssystem ist vorzugsweise ein Betriebssystem eines Laborgeräts und/oder von dessen Zugriffssteuerung, mit dem die Zugriffssteuerung und/oder das Laborgerät betrieben wird.

Die Zugriffssteuerung ist vorzugsweise dazu ausgebildet, den **anfragenden Benutzer,** insbesondere mehrere anfragende Benutzer, insbesondere den mindestens einen ersten Benutzer und den mindestens einen zweiten Benutzer, an der Zugriffssteuerung, insbesondere am Informationsverwaltungssystem der Zugriffssteuerung anzumelden. Der Anmeldevorgang wird auch als Einloggen bezeichnet. Vorzugsweise erhält der erfolgreich angemeldete Benutzer vorbestimmte Berechtigungen und/oder Zugriffsrechte. Die Anmeldung kann vom Benutzer selber aufgehoben werden oder aufgrund anderer Bedingungen aufgehoben werden, z.B. durch das gerätegesteuerte Abmelden des Benutzers, insbesondere bei Überschreiten einer maximalen Anmeldezeit, in der Benutzer ohne Unterbrechung über die Zugriffssteuerung eingeloggt war, oder nach einer vorbestimmten Zeit der Inaktivität, oder in Abhängigkeit vom Zeitpunkt des Endes einer vom Benutzer ausgeführten Behandlung, oder aufgrund einer individuellen Methodenprogrammierung. Das Aufheben der Anmeldung bedeutet vorzugsweise, dass die bei der Anmeldung gewährte Autorisierung wieder entzogen wird.

Das Einloggen in das Informationsverwaltungssystem erfolgt vorzugsweise dadurch, dass der Benutzer authentifiziert wird. Nach erfolgter Authentifizierung erhält der Benutzer zum Einloggen einen personalisierten Zugang zu dem Informationsverwaltungssystem, mit Berechtigungen und/oder Zugriffsrechten, die mittels der Datenbank für Zugriffsrechte ermittelt werden. Mit dem Login beginnt eine Sitzung, die durch ein Logout, auch bezeichnet als Abmelden, beendet wird.

Die Zugriffssteuerung ist vorzugsweise dazu ausgebildet, die Verwendung der Berechtigungen, Operationen und Objekte an dem Laborgerät, bzw. die Funktionen und Dienste des Laborgeräts, das die Zugriffssteuerung aufweist, in Abhängigkeit von den vorbestimmten Zugriffsrechten freizugeben, d.h. den authentifizierten Benutzer zu autorisieren. Die Zugriffssteuerung ist vorzugsweise Software-gesteuert, insbesondere programmgesteuert. Vorzugsweise wird als Anwendungsprotokoll bei der Implementierung der Softwarefunktionen LDAP eingesetzt (Lightweight Directory Access Protocol).

Die Zugriffskontrolle kann gemäß einem oder mehrerer spezieller Datenmodelle erfolgen. Ein solches spezielles Datenmodell ist insbesondere das Zugriffskontrollmodell (ZKM, Access Control Model). Die Zugriffskontrolle kann insbesondere einen sogenannten Referenz-Monitor aufweisen. Diese Komponente ist insbesondere als funktioneller Kern der Zugriffssteuerung zu verstehen. Der Referenz-Monitor erfüllt die Funktion der Entscheidung, ob der von einem Subjekt gewünschte Zugriff auf ein Objekt gewährt wird. Vorzugsweise ist von der Zugriffssteuerung kein Zugriff auf eine Ressource des Laborgeräts freigebbar, ohne dass der Referenz-Monitor benutzt wird. Der Referenz-Monitor erfüllt vorzugsweise auch die Funktion, die erfolgten Zugriffsversuche aufzuzeichnen.

Die Zugriffskontrolle ist vorzugsweise gemäß einem oder auch gemäß mehrerer der bekannten Grundformen DAC ("Discretionary Access Control"), MAC ("Mandatory Access Control") oder RBAC ("Role-Based Access Control") ausgestaltet, wobei RBAC besonders bevorzugt ist.

Vorzugsweise sieht die Zugriffskontrolle den Einsatz mindestens einer Rolle vor, vorzugsweise mehrerer Rollen, wobei insbesondere in der Rolle jeweils Rechte zusammengefasst sind. Die mindestens eine Rolle ist vorzugsweise in der Datenbank für Zugriffsrechte gespeichert. Eine Rolle ist insbesondere geeignet, angepasst an eine Zuständigkeit oder eine Aufgabenbeschreibung im Rahmen des Einsatzes eines Laborgeräts, insbesondere innerhalb des Unternehmens, welches das Laborgerät einsetzt, und/oder beim Unternehmen, dass einen Wartungsvertrag über das Laborgerät erfüllt, indem er z.B. Diagnosefunktionen am Laborgerät ausführt, und/oder beim Hersteller des Laborgeräts, der z.B. Firmware-Aktualisierungen, Kalibrierungen oder Informationen über das Laborgerät und/oder dessen Zubehör über die Zugriffssteuerung direkt an das Laborgerät zu übersenden. Solche Rollen können insbesondere Rechte zusammenfassen. Anstatt für jeden Benutzer einen Satz an Einzelrechten zu speichern, kann ihm mindestens eine Rolle zugeordnet werden. Die Rollenzuweisung ist besonders zuverlässig in der Umsetzung und erfordert relativ wenig Aufwand, insbesondere Verwaltungsaufwand beim Ermitteln und Speichern der Rechte.

Vorzugsweise sieht die Zugriffskontrolle mindestens zwei, vorzugsweise mehrere Rollen vor. Mögliche Rollen sind insbesondere Administrator ("Admin"), Wartungsdienst ("Maintenance"), normaler Labor-Benutzer ("LabUser"), unerfahrener Labor-Benutzer ("Inexperienced"), Manager. Durch solche Rollen wird eine sichere und effiziente Zugriffskontrolle ermöglicht. Die Benutzung eines mit der Zugriffssteuerung versehenen Laborgeräts ist sicher und effizient. Es wird auf einfache Weise verhindert, dass ein Benutzer z.B. wegen mangelnder Qualifikation bestimmte Operationen am Laborgerät durchführt, die gegebenenfalls zu Beschädigungen oder ineffizienter Nutzung des Laborgeräts bzw. zu Mehrkosten im Betrieb führen, z.B. durch überflüssigen Verbrauch an Verbrauchsmaterial, das für eine Behandlung verwendet wird.

Vorzugsweise sieht die Zugriffskontrolle mindestens eine Rolle oder mehr als eine Rolle vor, denen ein Benutzer gleichzeitig zugeordnet sein kann. Ein Individuum kann somit z.B. als Administrator oder als normaler Labor-Benutzer Zugriff erhalten, in Abhängigkeit von einer weiteren Bedingung. Vorzugsweise kann der Benutzer selber entscheiden, in welcher Rolle er am Laborgerät Zugriff erhält. Es ist aber auch möglich, dass der Benutzer dies nicht selber entscheidet sondern dies die Zugriffssteuerung entscheidet. Diese Bedingung kann der verwendete Datensatz zur Authentifizierung sein, insbesondere das verwendete Passwort, oder kann von einem Parameter des Laborgeräts abhängen, insbesondere von einem Betriebsparameter des Laborgeräts, z.B. einem Betriebsparameter, der den Fehlerstatus des Laborgeräts kennzeichnet.

Vorzugsweise weist die Steuereinrichtung der Zugriffssteuerung und/oder die Steuereinrichtung des Laborgeräts eine Speichereinrichtung auf, in der **Benutzerqualifikationsdaten** gespeichert sind, in denen für jeden Benutzer des Laborgerätes eine Qualifikation in Form mindestens eines Qualifikationswertes oder Zertifikats zugeordnet werden. Vorzugsweise ist die Zugriffssteuerung, insbesondere die Steuereinrichtung der Zugriffssteuerung, so eingerichtet, dass einem Benutzer in Abhängigkeit von dessen Qualifikation die Berechtigungen und/oder Zugriffsrechte erteilt werden, insbesondere eine Rolle zugewiesen wird. Dadurch können Benutzer das Laborgerät entsprechend ihrer Qualifikation verwenden und insbesondere werden unerfahrene Benutzer nicht überfordert. Dadurch wird die Produktivität und Betriebssicherheit bei der Verwendung des Laborgeräts gesteigert.

Vorzugsweise ist die Steuereinrichtung der Zugriffssteuerung und/oder die Steuereinrichtung des Laborgeräts dazu ausgebildet, ein **Qualifizierungsverfahren** für mindestens einen Benutzer durchzuführen, bei dem der mindestens eine Benutzer eine von der Steuereinrichtung durchgeführte und ausgewertete Qualifizierungsprüfung durchläuft, und wobei das Qualifizierungsverfahren insbesondere vorsieht, die vom mindestens einem Benutzer in Antwort auf bestimmte Fragen eingegebenen Daten auszuwerten und insbesondere vorsieht, dem mindestens einen Benutzer, insbesondere gemäß einer Vergleichstabelle oder Rechenvorschrift, in Abhängigkeit vom Ergebnis dieser Auswertung eine Qualifikation zuzuordnen. Ein derartiges, an der Zugriffssteuerung bzw. am Laborgerät durchgeführtes Qualifizierungsverfahren ist besonders praxisnah und deshalb effizient.

Vorzugsweise ist die Steuereinrichtung der Zugriffssteuerung und/oder die Steuereinrichtung des Laborgeräts dazu ausgebildet, dem Benutzer in Abhängigkeit von seiner Qualifikation mittels der Zugriffssteuerung bestimmte Zugriffsrechte auf Funktionen des Laborautomaten zu erteilen und/oder zu entziehen.

Vorzugsweise ist die Steuereinrichtung der Zugriffssteuerung und/oder die Steuereinrichtung des Laborgeräts dazu ausgebildet, dem Benutzer in Abhängigkeit von seiner Qualifikation mindestens eine, der Qualifikation entsprechende, grafische Benutzeroberfläche auf der Anzeige der Benutzerschnittstelleneinrichtung anzuzeigen und/oder insbesondere bestimmte Hilfsassistenzprogramme und/oder Hilfsinformationen zu Verfügung zu stellen oder nicht zur Verfügung zu stellen.

Vorzugsweise weist die Steuereinrichtung der Zugriffssteuerung und/oder die Steuereinrichtung des Laborgeräts einen Zeitgeber, insbesondere eine Uhr, und insbesondere eine **Reservierungseinrichtung** auf, die eine Speichereinrichtung aufweist, in der Reservierungsdaten gespeichert sind, die insbesondere mindestens einen Reservierungsdatensatz oder eine Vielzahl von Reservierungsdatensätzen enthalten, die zumindest einen Reservierungszeitplan ("booking schedule"), insbesondere für jede Behandlungseinrichtung einzeln, beschreiben.

Ein Reservierungsdatensatz enthält insbesondere mindestens eine der Informationen, insbesondere welcher Benutzer, insbesondere zu welchem Zeitpunkt, insbesondere welche Behandlung von Proben, insbesondere mittels welches Laborgerätes, durchführt, bzw. durchgeführt hat, bzw. durchführen wird. Die Reservierungsdaten enthalten vorzugsweise Informationen über die von der Reservierungseinrichtung akzeptierten Reservierungen, die nach einem Vergleich mit den im Reservierungszeitplan vorhandenen freien Kapazitäten tatsächlich bestätigt und in den Reservierungszeitplan aufgenommen wurden. Die Reservierungsdaten können aber auch Reservierungsanträge ("booking requests") enthalten, die die Reservierungseinrichtung insbesondere auch zu einem späteren Zeitpunkt nach der Antragstellung erneut prüfen kann und gegebenenfalls später akzeptieren kann, falls z.B. ein früherer Eintrag in der Reservierungszeitplan nachträglich storniert wurde. Der Reservierungsdatensatz enthält vorzugsweise auch die Information darüber, welche Art der Behandlung am Laborgerät jeweils geplant ist und/oder Informationen über das zu verwendende Methodenprogramm, und enthält vorzugsweise insbesondere mindestens einen Programmparameter oder Steuerparameter.

Vorzugsweise ist die Zugriffssteuerung dazu ausgebildet, einem Benutzer auf Anfrage mindestens eine Information über den Reservierungszeitplan zu übersenden, insbesondere den Reservierungszeitplan teilweise oder vollständig zu übersenden oder mindestens eine Änderung des Reservierungszeitplans zu übersenden. Vorzugsweise ist die Zugriffssteuerung dazu ausgebildet, einem Benutzer automatisch eine Nachricht in Abhängigkeit von mindestens einer Bedingung zu übersenden. Diese Bedingung könnte die Änderung des Reservierungszeitplans eines Laborgeräts sein, insbesondere betreffend die Verfügbarkeit eines Termins zur Durchführung einer Behandlung, insbesondere das Freiwerden oder Stornieren eines Termins.

Die "Art der Behandlung" ist insbesondere durch die Programmparameter vorgegeben, die eine Behandlung kennzeichnen. Solche Programmparameter werden insbesondere von der Steuereinrichtung dazu verwendet, ein Methodenprogramm zu erzeugen. Ein Methodenprogramm ist insbesondere ein Steuerungscode zur Steuerung der Behandlung mittels Steuerparameter. Die Steuerparameter werden insbesondere von der Steuereinrichtung, insbesondere von einem in der Steuereinrichtung ablaufenden Steuerprogramm, z.B. einem Betriebssystem, unter Verwendung der Programmparameter erzeugt. Die Behandlung einer Probe wird insbesondere durchgeführt, indem von der Steuereinrichtung ein Methodenprogramm ausgeführt wird. Eine "Art der Behandlung" meint eine Methode, nämlich eine Anwendungsart (z.B. "MagSep Blood gDNA", "Compose Mastermix" etc.). Der Benutzer wählt bei einer bevorzugten Ausgestaltung des Laborgeräts als Laborautomat zunächst eine gewünschte Anwendung, also eine "Art der Behandlung", indem er insbesondere am Touchscreen eines Geräts eine Anwendung auswählt. Diese Anwendung, auch bezeichnet als "Methode", ist insbesondere einem Programmmodul zugeordnet, das insbesondere ein Bestandteil des Steuerprogramms sein kann. Insbesondere mittels des Programmoduls wird vom Benutzer mindestens ein Programmparameter abgefragt. Ein Programmmodul erzeugt insbesondere ein Methodenprogramm auf Basis des mindestens einen vom Benutzer gewählten Programmparameters.

Vorzugsweise ist die Steuereinrichtung der Zugriffssteuerung und/oder die Steuereinrichtung des Laborgeräts dazu ausgebildet, Reservierungsdaten in der Speichereinrichtung der Reservierungseinrichtung abzuspeichern.

Vorzugsweise ist die Steuereinrichtung der Zugriffssteuerung und/oder die Steuereinrichtung des Laborgeräts dazu ausgebildet, den von einem Benutzer in das Laborgerät, insbesondere mittels der Benutzerschnittstelleneinrichtung oder einer portablen bzw. mobilen Benutzerschnittstelleneinrichtung eingegebenen Reservierungsdatensatz aufzunehmen.

Vorzugsweise ist die Steuereinrichtung der Zugriffssteuerung und/oder die Steuereinrichtung des Laborgeräts dazu ausgebildet, den von einem Benutzer eingegebenen Reservierungsdatensatz mit bereits in der Speichereinrichtung der Benutzerschnittstelleneinrichtung gespeicherten Reservierungsdaten zu vergleichen.

Vorzugsweise ist die Steuereinrichtung der Zugriffssteuerung und/oder die Steuereinrichtung des Laborgeräts dazu ausgebildet, mindestens einen, einige oder alle von mindestens einem Benutzer eingegebenen Reservierungsdatensätze in der Speichereinrichtung zu speichern.

Vorzugsweise ist die Steuereinrichtung der Zugriffssteuerung und/oder die Steuereinrichtung des Laborgeräts dazu ausgebildet, einige oder alle von mindestens einem Benutzer eingegebenen und in der Speichereinrichtung gespeicherten Reservierungsdatensätze gemäß einem in der Steuereinrichtung abgelegten Auswerteverfahren auszuwerten, und nach mindestens einem Kriterium den Zeitplan zu erstellen, indem der/die Reservierungsdatensätze gemäß dem mindestens einen Kriterium eines in der Steuereinrichtung abgelegten Sortierverfahrens sortiert werden.

Vorzugsweise ist die Steuereinrichtung der Zugriffssteuerung und/oder die Steuereinrichtung des Laborgeräts dazu ausgebildet, mittels eines Auswerteverfahrens dem mindestens einen Reservierungsdatensatz eine Priorität zuzuordnen, die gemäß mindestens eines Kriteriums ermittelt wird.

Das Kriterium kann insbesondere durch eine in der Steuereinrichtung gespeicherte Datentabelle repräsentiert sein, in der z.B. die Priorität zu mindestens einem anderen Parameter in Bezug gesetzt wird, wobei dieser andere Parameter z.B. den Benutzer oder eine Benutzergruppe, oder die Klassifizierung einer Behandlung gemäß einer Relevanzliste (z.B. von wichtig bis unwichtig, kostspielig bis kostengünstig, etc.) charakterisieren kann.

Vorzugsweise ist die Steuereinrichtung der Zugriffssteuerung und/oder die Steuereinrichtung des Laborgeräts dazu ausgebildet, dass das Sortierverfahren mindestens zwei Reservierungsdatensätze gemäß mindestens eines Kriteriums sortiert, um insbesondere einen Zeitplan zu erstellen, der andere Zeitdaten verwendet, als dies in den Reservierungsdatensätzen der Benutzer vorgesehen ist.

Das Kriterium kann entsprechend der Definitionen beim Auswerteverfahren gewählt sein. Vorzugsweise ist die Steuereinrichtung zur Realisierung eines bevorzugten Kriteriums dazu ausgebildet, die Reservierungsdatensätze unter dem Aspekt zu sortieren, dass eine Ressource optimiert wird.

Diese Ressource kann z.B. die Zeit sein, insbesondere kann eine Minimierung der Wartezeiten angestrebt werden, die ein Benutzer jeweils als Differenz zwischen der von ihm gewünschten Startzeit und der vom Laborgerät nach Auswertung und Sortierung zugewiesenen Startzeit für sein Experiment, also die von ihm gewünschte Behandlung, erhält. Es kann auch die Minimierung der Passivitätszeit angestrebt werden, während der ein Laborgerät nicht genutzt wird. Insbesondere können auch zwischenzeitliche Wartungs-, Reinigungs- und/oder Sterilisierungsvorgänge mit eingeplant werden, während der z.B. mindestens ein Arbeitsbereich mindestens eines Laborgeräts bzw. Laborautomaten vorbereitet wird, insbesondere manuell und/oder automatisch vorbereitet, und/oder gereinigt und/oder sterilisiert wird.

Diese Ressource kann auch die Energie sein, die möglicherweise über verschieden und nacheinander ablaufende Behandlungen in Abhängigkeit von deren Reihenfolge unterschiedlich stark verbraucht wird.

Die Ressource kann ein Verbrauchsmaterial sein, insbesondere eine Substanz, z.B. ein Reinigungsmittel, oder bestimmte Transportbehälter, z.B. Pipettenspitzen, oder Lagerbehälter, z.B. Mikrotiterplatten, die über verschieden und nacheinander ablaufende Behandlungen in Abhängigkeit von deren Reihenfolge unterschiedlich stark verbraucht werden. Möglicherweise werden bei, von unterschiedlichen Benutzern geplanten Behandlungen die gleichen Methoden verwendet, so dass es effizient sein kann, die Reservierungen anhand der Methoden zu sortieren. Es ist z.B. denkbar, dass eine bestimmte Substanz und/oder ein bestimmtes Verbrauchsmaterial und/oder ein bestimmtes Werkzeug bei mehreren von unterschiedlichen (oder denselben) Benutzer(n) geplanten Methoden eingesetzt werden. Dann kann es insbesondere effizient sein, diese Substanz bzw. dieses Verbrauchsmaterial bzw. dieses Werkzeug im Laborgerät zu lagern, so dass einige Transportvorgänge überflüssig werden, wodurch Zeit gespart wird, und ggf. auch die Ressource selbst, die oftmals unter sterilen Bedingungen gehalten werden muss. Es wäre z.B. auch möglich, dass zwei im Reservierungszeitplan zeitlich nacheinander vorgesehene Behandlungen sich bestimmte Verbrauchsmaterialien teilen können. Beispielsweise könnte ein und derselbe Lagerbehälter in beiden Behandlungen verwendbar sein, so dass es effizient ist, den Lagerbehälter nach Beendigung der ersten Behandlung für die zweite Behandlung zu verwenden, anstatt zum Ende der ersten Behandlung den ersten Lagerbehälter zu entsorgen und zu Beginn der zweiten Behandlung einen weiteren Lagerbehälter einzusetzen. Dadurch kann in vielen Situationen Material und Zeit gespart werden.

Die Ressource kann auch die Mehrzahl von Laborgeräten sein, auf die die in einem Reservierungszeitraum anfallenden Reservierungen gemäß der mehreren Reservierungsdatensätze mehrerer Benutzer automatisch verteilt werden sollen, um eine optimale Ausnutzung des in einem Labor verfügbaren Parks von Laborgeräten zu erhalten. Insbesondere kann es Experimente geben, die den zeitlich abgestimmten Einsatz von mehr als einem Laborgerät erfordern. Die Ressource kann deshalb darin bestehen, eine Mehrzahl von Laborgeräten zeitlich optimal zu nutzen, insbesondere unter Berücksichtigung mindestens eines Experiments oder mehrerer Experimente, die jeweils unterschiedliche Laborgeräte benötigen können.

Beispielsweise ist es möglich, dass eine höherrangige Rolle, z.B. ein "Administrator", die Reservierung von Behandlungseinrichtungen, also Reservierungseinträge im Reservierungszeitplan, löschen oder verschieben kann, beispielsweise weil ein (externer) Servicetechniker die Behandlungseinrichtung(en) an dem Termin warten muss/will oder aus anderen oben geschilderten Gründen. Insbesondere aus Kundensicht bevorzugt ist dabei nicht ein ungefragtes Agieren, sondern ein Hinweis an den/die Benutzer der vorbelegten einen oder mehreren Behandlungseinrichtungen, dass die Nutzung der Behandlungseinrichtung auf einen späteren Zeitpunkt verschoben werden muss. Dabei könnte auch das Vorschlagen eines geeigneten alternativen Zeitpunktes sinnvoll sein. Die Steuereinrichtung ist vorzugsweise dazu ausgebildet, einen solchen Hinweis über die Benutzerschnittstelleneinrichtung des betreffenden Benutzers auszugeben, insbesondere unter Verwendung einer Datenfernverbindung.

Sofern eine Behandlungseinrichtung sehr stark nachgefragt ist, eignet sich insbesondere ein Reservierungsmechanismus, der als eine FIFO-Liste (FIFO - first in first out) aufgebaut ist und die wiederum dafür genutzt wird, den an oberster Stelle stehenden Benutzer in dem Moment zu informieren, wenn die Behandlungseinrichtung nicht belegt ist, bzw. in einem ausgewählten Zeitraum in der Zukunft nicht belegt sein wird. Diese Information umfasst dann vorzugsweise auch den Zeitrahmen, den die Behandlungseinrichtung zur Verfügung steht. Der an oberster Stelle stehende Benutzer bekäme dann für einen definierten Zeitraum die Priorität, die Behandlungseinrichtung zu belegen. Tut er dies nicht, wird der Benutzer von der Liste gestrichen und die Belegungsoption geht an den nächsten Benutzer auf der Liste usw.

Der Begriff **"gerätegesteuerte Behandlung"** bedeutet, dass die Behandlung der mindestens einen Laborprobe zumindest teilweise vom Laborgerät gesteuert wird, insbesondere durchgeführt wird. Soweit die Behandlung vom Laborgerät gesteuert und/oder durchgeführt wird, wird diese insbesondere insofern nicht vom Benutzer gesteuert und/oder durchgeführt, insbesondere nicht manuell vom Benutzer gesteuert und/oder durchgeführt.

Unter einer gerätegesteuerten Behandlung wird ferner vorzugsweise verstanden, dass die Behandlung in Abhängigkeit von mindestens einer Benutzereingabe zumindest teilweise vom Laborgerät gesteuert wird, insbesondere durchgeführt wird. Die Benutzereingabe kann vor dem Start der Behandlung erfolgen und/oder während der Behandlung. Die Benutzereingabe erfolgt vorzugsweise über eine Benutzerschnittstelleneinrichtung, die vorzugsweise ein Bestandteil des Laborgeräts ist, oder die separat vom Laborgerät vorgesehen ist und mit der Steuereinrichtung des Laborgeräts und/oder der Steuereinrichtung der Zugriffssteuerung signalverbunden ist. Die Benutzereingabe dient insbesondere der Eingabe mindestens eines Parameters, dessen Wert die Behandlung beeinflusst und/oder steuert. Dieser Parameter kann insbesondere ein Programmparameter sein.

Die "gerätegesteuerte Behandlung" bezeichnet insbesondere die zumindest teilautomatisierte Behandlung. Bei einer teilautomatisierten Behandlung ist es insbesondere möglich, dass die Behandlung so durchgeführt wird, dass nach dem Starten der Behandlung und vor dem Beenden der Behandlung mindestens eine Benutzereingabe erfolgt, mit der der Benutzer die laufende Behandlung beeinflussen kann, insbesondere indem er z.B. eine über eine Benutzerschnittstelleneinrichtung des Laborgeräts erfolgende automatische Abfrage beantwortet, insbesondere eine Eingabe bestätigt oder verneint oder andere Eingaben vornimmt. Bei der teilautomatisierten Behandlung ist es insbesondere möglich, dass die Behandlung mehrere Behandlungsschritte aufweist, die insbesondere zeitlich nacheinander automatisch durchgeführt werden, und mindestens einen Behandlungsschritt aufweist, der eine, insbesondere über eine Benutzerschnittstelleneinrichtung erfolgende, Benutzereingabe erfordert.

Eine gerätegesteuerte Behandlung ist vorzugsweise eine **programmgesteuerte Behandlung,** also eine durch ein Programm gesteuerte Behandlung. Unter einer programmgesteuerten Behandlung einer Probe ist zu verstehen, dass der Vorgang der Behandlung im Wesentlichen durch Abarbeiten einer Mehrzahl oder Vielzahl von Programmschritten erfolgt. Vorzugsweise erfolgt die programmgesteuerte Behandlung unter Verwendung mindestens eines Programmparameters, insbesondere mindestens eines vom Benutzer gewählten Programmparameters. Ein von einem Benutzer gewählter Parameter wird auch als Nutzerparameter bezeichnet. Die programmgesteuerte Behandlung erfolgt vorzugsweise mithilfe einer digitalen Datenverarbeitungseinrichtung, die insbesondere Bestandteil der Steuereinrichtung des Laborgeräts sein kann. Die digitale Datenverarbeitungseinrichtung kann mindestens einen Prozessor, d.h. eine CPU aufweisen, und/oder mindestens einen Mikroprozessor aufweisen. Die programmgesteuerte Behandlung wird vorzugsweise entsprechend den Vorgaben eines Programms gesteuert und/oder durchgeführt, insbesondere eines Steuerprogramms. Insbesondere ist bei einer programmgesteuerten Behandlung zumindest nach Erfassung der benutzerseitig erforderlichen Programmparameter im Wesentlichen keine Benutzertätigkeit erforderlich.

Unter einem **Programmparameter** wird eine Variable verstanden, die innerhalb eines Programms oder Unterprogramms, für mindestens eine Durchführung (Aufruf) des Programms oder Unterprogramms gültig, in vorbestimmter Weise eingestellt werden kann. Der Programmparameter wird, z.B. vom Benutzer, festgelegt und steuert das Programm oder Unterprogramm und bewirkt eine Datenausgabe in Abhängigkeit von diesem Programmparameter. Insbesondere beeinflusst und/oder steuert der Programmparameter und/oder steuern die vom Programm ausgegebenen Daten die Steuerung des Geräts, insbesondere die Steuerung der Behandlung mittels der mindestens einen Behandlungseinrichtung.

Ein Programmparameter kann ein benutzerseitig erforderlicher Programmparameter sein. Ein benutzerseitig erforderlicher Programmparameter zeichnet sich dadurch aus, dass er für die Ausführung einer Behandlung, insbesondere zur Ausführung eines Methodenprogramms, erforderlich ist. Andere Programmparameter, die nicht benutzerseitig erforderlich sind, können aus den benutzerseitig erforderlichen Programmparametern abgeleitet werden oder anderweitig verfügbar gemacht werden, insbesondere wahlweise vom Benutzer eingestellt werden. Die Einstellung eines Programmparameters durch einen Benutzer erfolgt insbesondere durch Anzeige einer Auswahl von möglichen vorgegebenen Werten aus einer im Laborgerät gespeicherten Liste von vorgegebenen Werten, wobei der Benutzer aus dieser Liste den gewünschten Parameter auswählt und somit einstellt. Es ist auch möglich, dass dieser Programmparameter eingestellt wird, indem der Benutzer den Wert eingibt, indem er z.B. über einen Ziffernblock eine numerische Zahl eingibt, die dem gewünschten Wert entspricht oder indem der Benutzer einen Wert kontinuierlich oder in Inkrementen erhöht bzw. erniedrigt, bis dieser dem gewünschten Wert entspricht, und den Wert so einstellt. Andere Formen der Eingabe, z.B. durch Sprach- oder Gestensteuerung sind denkbar.

Unter einem **Programm** wird insbesondere ein Computerprogramm verstanden. Ein Programm ist eine Folge von Anweisungen, insbesondere bestehend aus Deklarationen und Instruktionen, um auf einer digitalen Datenverarbeitungsanlage eine bestimmte Funktionalität, Aufgaben- oder Problemstellung bearbeiten und/oder lösen zu können. Ein Programm liegt in der Regel als Software vor, die mit einer digitalen Datenverarbeitungsanlage verwendet wird. Das Programm kann insbesondere als Firmware vorliegen, im Fall der vorliegenden Erfindung insbesondere als Firmware der Steuereinrichtung des Laborgeräts und/oder der Zugriffssteuerung. Das Programm liegt meist auf einem Datenträger als ausführbare Programmdatei, häufig im sogenannten Maschinencode vor, die zur Ausführung in den Arbeitsspeicher des Rechners der digitalen Datenverarbeitungsanlage geladen wird. Das Programm wird als Abfolge von Maschinen-, d. h. Prozessorbefehlen von dem/den Prozessoren des Computers verarbeitet und damit ausgeführt. Unter 'Computerprogramm' wird insbesondere auch der Quelltext des Programms verstanden, aus dem im Verlauf der Steuerung des Laborgerätes der ausführbare Code entstehen kann.

Als **Anweisung** wird in üblicher Weise ein zentrales Element einer Programmiersprache bezeichnet. Die Programme derartiger Sprachen setzen sich primär aus einer oder mehreren Anweisungen zusammen. Eine Anweisung stellt eine in der Syntax einer Programmiersprache formulierte einzelne Vorschrift dar, die im Rahmen der Abarbeitung des Programms auszuführen ist. Wie eine Anweisung syntaktisch auszusehen hat, wird durch die jeweilige Programmiersprache bzw. deren Spezifikation festgelegt. In der maschinennahen Programmierung werden Anweisungen häufig auch als Befehl bezeichnet. Anweisungen sind üblicherweise Zuweisungen, Kontrollanweisungen (wie Sprünge, Schleifen und bedingte Anweisungen) und Prozeduraufrufe. Abhängig von der Programmiersprache sind teilweise auch Zusicherungen, Deklarationen, Klassen- und Funktionsdefinitionen, sowie(?) Anweisungen. Die Anweisungen des Steuerprogramms können so in üblicher Weise ausgestaltet sein.

Unter einem **Programmmodul** wird in üblicher Weise eine abgeschlossene funktionale Einheit einer Software verstanden, bestehend aus einer Folge von Verarbeitungsschritten und Datenstrukturen. Dabei können insbesondere folgende Definitionen zutreffen: Der Inhalt eines Moduls ist häufig eine wiederkehrende Berechnung oder Bearbeitung von Daten, die mehrfach durchgeführt werden muss. Module bieten eine Kapselung durch die Trennung von Schnittstelle und Implementierung: Die Schnittstelle eines Moduls definiert die Datenelemente, die als Eingabe und Ergebnis der Verarbeitung durch das Modul benötigt werden. Die Implementierung enthält den tatsächlichen Programmcode. Ein Modul wird zum Beispiel als Funktion oder Unterprogramm aufgerufen, führt eine Reihe von Verarbeitungsschritten durch und liefert als Ergebnis Daten zurück an das aufrufende Programm. Ein Modul kann selbst weitere Module aufrufen - so ist eine Hierarchie von Programmaufrufen möglich. Die in Modulen festgelegten Datenstrukturen und Methoden können gegebenenfalls vererbt und von anderen Modulen geerbt werden. Module sind daher ein wesentliches Element in der strukturierten und objektorientierten Programmierung.

Unter einem **Steuerprogramm** wird ein ausführbares Computerprogramm verstanden, das vorzugsweise die gewünschte Behandlung der mindestens einen Probe steuert und/oder durchführt, insbesondere in Abhängigkeit von mindestens einem Programmparameter. Dieser Programmparameter kann ein vom Benutzer beeinflusster und/oder eingestellter Programmparameter sein. Die Behandlung kann insbesondere gesteuert werden, indem die Steuereinrichtung in Abhängigkeit von den Programmparametern einen oder mehrere Steuerparameter erzeugt, mittels derer die mindestens eine Behandlungseinrichtung gesteuert wird. Vorzugsweise weist das Laborgerät ein Betriebssystem auf, das ein Steuerprogramm sein kann oder aufweisen kann. Das Steuerprogramm kann insbesondere ein Betriebssystem des Laborgeräts bezeichnen oder einen Bestandteil des Betriebssystems. Das Betriebssystem steuert die Behandlung und weitere Betriebsfunktionen des Laborgeräts.

Das Steuerprogramm kann insbesondere mit der Zugriffssteuerung signalverbunden sein, und/oder kann die Zugriffssteuerung steuern. Die Steuereinrichtung der Zugriffssteuerung kann in die Steuereinrichtung des Laborgeräts integriert sein, oder kann getrennt von dieser Steuereinrichtung ausgebildet sein. Die Zugriffssteuerung kann in die Steuereinrichtung des Laborgeräts integriert sein. Die Steuerung der Zugriffssteuerung kann in die Steuerung des Laborgeräts integriert sein, kann vom Steuerprogramm steuerbar sein und/oder kann insbesondere in das Steuerungsprogramm integriert sein. Das Steuerprogramm kann weitere vorzugsweise vorgesehene Funktionen des Laborgeräts steuern, zum Beispiel eine Energiesparfunktion des Laborgeräts oder eine Kommunikationsfunktion zur Kommunikation mit externen Datenverarbeitungseinrichtungen, die insbesondere separat zum Laborgerät vorgesehen sind und insbesondere nicht ein Bestandteil des Laborgeräts sind.

Unter einem **Methodenprogramm** wird ein Programm verstanden, das den konkreten Ablauf einer Behandlung bestimmt, insbesondere gemäß einer vorbestimmten Behandlungsart und/oder gemäß einer benutzerseitig festgelegten Weise.

Die Erfindung betrifft ferner ein **Laborgerät** zur gerätegesteuerten Behandlung mindestens einer Laborprobe, das mindestens eine Behandlungseinrichtung zur Durchführung der Behandlung der mindestens einen Laborprobe und eine erfindungsgemäße Zugriffssteuerung aufweist.

Vorzugsweise weist das Laborgerät eine Kommunikationseinrichtung zur Herstellung einer Datenfernverbindung für den Datenaustausch mit einem externen Gerät auf, das ebenfalls eine geeignete Kommunikationseinrichtung zur Herstellung einer Fernverbindung für den Datenaustausch mit dem Laborautomat aufweist. Eine solche Kommunikationseinrichtung kann zur Ausbildung einer Funkverbindung ausgebildet sein, insbesondere einer Mobilfunkverbindung. Vorzugsweise ist die Kommunikationseinrichtung dazu eingerichtet, den Fernzugriff eines Benutzers auf das Laborgerät, insbesondere die Auswahl oder Einstellung mindestens eines Parameters zu ermöglichen, insbesondere eines Parameters der eine Funktion des Laborgeräts zu steuern, insbesondere die Funktion der Ausführung einer Behandlung.

Vorzugsweise ist die Steuereinrichtung der Zugriffssteuerung oder des Laborgeräts dazu ausgebildet, **Synchronisationsdaten** bereitzustellen. Vorzugsweise ist die Zugriffssteuerung, insbesondere die Steuereinrichtung der Zugriffssteuerung, so eingerichtet, dass, wenn mindestens eine Bedingung erfüllt ist, über die Schnittstelleneinrichtung Informationen über den Betriebszustand des Laborgeräts, Messwerte oder durch Benutzer beeinflussbare Einstellungen oder Programmierungen des Laborgeräts an die zweite Benutzerschnittstelleneinrichtung übermittelt werden. Durch die Informationsübermittlung kann das Laborgerät, insbesondere eine dort laufende Behandlung, mittels der zweiten Benutzerschnittstelleneinrichtung weiter beobachtet und/oder gesteuert werden. Insbesondere kann der Verwendungszustand der ersten Benutzerschnittstelleneinrichtung teilweise oder vollständig in die zweite Benutzerschnittstelleneinrichtung kopiert, bzw. geklont werden. Die Informationsübermittlung kann insbesondere ein Synchronisierungsvorgang sein. Die erste und zweite Benutzerschnittstelle können insbesondere auf diese Weise synchronisiert werden. Die mindestens eine Bedingung kann sein, dass der Zugriff des zugreifenden Benutzers über eine Datenfernverbindung via einer (mobilen) Benutzerschnittstelleneinrichtung und der Antrag des Benutzers nach einer Synchronisierung erfolgt. Die mindestens eine Bedingung kann zudem die Bedingung a) oder b) sein, nämlich die Antwort auf die Prüfung, ob der anmeldende Benutzer vorausgehend bereits über eine erste Benutzerschnittstelleneinrichtung a) eine oder mehrere gerade ausgeführte Funktionen des Laborgeräts aktiviert hatte oder b) schon angemeldet ist. In den Fällen a) und b) würde die Synchronisierung nur einem Benutzer mit aktiver Sitzung und/oder gerade am Laborgerät aktivierten Funktionen, insbesondere laufenden Behandlungen die vom Benutzer initiiert wurden, erlaubt werden. Es ist aber auch möglich und bevorzugt, dass es einem weiteren Benutzer erlaubt werden kann, eine Synchronisierung durchzuführen, z.B. um eine Fernsteuerung zum Zwecke der Assistenz bei einer laufenden Sitzung oder Behandlung durchzuführen, oder Wartungsarbeiten etc.

Vorzugsweise ist die Steuereinrichtung der Zugriffseinrichtung dazu eingerichtet, diese Synchronisationsdaten an eine -insbesondere mobile- Benutzerschnittstelleneinrichtung zu übertragen. Vorzugsweise sind diese Synchronisationsdaten dazu geeignet, die in der Anzeige der Benutzerschnittstelleneinrichtung angezeigten Informationen zumindest teilweise identisch auf der Anzeige der -insbesondere mobilen- Benutzerschnittstelleneinrichtung anzuzeigen.

Der Begriff **Laborgerät** bezeichnet insbesondere ein Gerät, das zur gerätegesteuerten Behandlung mindestens einer Laborprobe ausgebildet ist und das zur Verwendung in einem Labor ausgebildet ist. Bei diesem Labor kann es sich insbesondere um ein chemisches, biologisches, biochemisches, medizinisches oder forensisches Laboratorium handeln. Solche Labors dienen der Forschung und/oder der Analyse von Laborproben, können aber auch zur Herstellung von Produkten mittels Laborproben oder der Herstellung von Laborproben dienen.

Ein Laborgerät ist vorzugsweise eines der folgenden Laborgeräte und/oder ist vorzugsweise als mindestens eines der folgenden Laborgeräte ausgebildet: Laborzentrifuge, im Rahmen der Beschreibung der vorliegenden Erfindung auch bezeichnet als "Zentrifuge" oder "centrifuge"; Thermocycler, im Rahmen der Beschreibung der vorliegenden Erfindung auch bezeichnet als "Cycler"; Labor-Spektralphotometer, im Rahmen der Beschreibung der vorliegenden Erfindung auch bezeichnet als "Biospektrometer"; Zellenzählgerät, im Rahmen der Beschreibung der vorliegenden Erfindung auch bezeichnet als "cellcounter", insbesondere optische Zählgeräte; Labor-Inkubator, im Rahmen der Beschreibung der vorliegenden Erfindung auch bezeichnet als "incubator"; Labor-Schüttelgerät, im Rahmen der Beschreibung der vorliegenden Erfindung auch bezeichnet als "shaker"; Labor-Mischer, auch bezeichnet als "mixing device"; Labor-Gefriergerät, im Rahmen der Beschreibung der vorliegenden Erfindung auch bezeichnet als "freezer"; Bioreaktor, im Rahmen der Beschreibung der vorliegenden Erfindung auch bezeichnet als Fermenter; Sicherheitswerkbank, insbesondere Biosicherheitswerkbank, im Rahmen der Beschreibung der vorliegenden Erfindung auch bezeichnet als "biosafety cabinet"; Probenplatten-Lesegerät, im Rahmen der Beschreibung der vorliegenden Erfindung auch bezeichnet als "plate reader", insbesondere "microplate reader"; Laborautomat zur Behandlung von fluiden Proben, insbesondere Pipettierautomat.

Eine **Laborzentrifuge** ist ein Gerät, das unter Ausnutzung der Massenträgheit arbeitet. Die Laborzentrifuge, insbesondere die Behandlungseinrichtung der Laborzentrifuge, weist insbesondere mindestens einen Rotor auf, indem die mindestens eine Laborprobe anordenbar ist. Der mindestens eine Rotor ist rotierbar in mindestens einem Zentrifugenkessel angeordnet. Die Laborzentrifuge, insbesondere die Behandlungseinrichtung der Laborzentrifuge, weist mindestens eine Antriebseinrichtung auf, mittels der die Rotation angetrieben und/oder gebremst wird. Die Proben sind in dem mindestens einen Rotor anordenbar, vorzugsweise in Laborbehältern, z.B. Probenröhrchen, die in geeigneten Halterungen im Rotor angeordnet werden. Vorzugsweise weist die Laborzentrifuge, insbesondere die Behandlungseinrichtung der Laborzentrifuge, mindestens eine Heiz-/Kühleinrichtung auf, mit der die Temperatur der mindestens einen im Rotor angeordneten Probe gesteuert und/oder geregelt werden kann. Vorzugsweise weist die Laborzentrifuge, insbesondere die Behandlungseinrichtung der Laborzentrifuge, eine Zeitgebereinrichtung auf, mit der zeitliche Parameter der Rotation oder Temperatureinstellung steuerbar sind. Die Funktionsweise beruht auf der Zentrifugalkraft, die aufgrund einer gleichförmigen Kreisbewegung der zu zentrifugierenden Proben zustande kommt. Die Zentrifugalkraft wird zur Stofftrennung von Stoffen unterschiedlicher Dichte genutzt, die in einer Probe enthalten sind. Eine Zentrifuge kann ein Trennverfahren durchführen, bei dem insbesondere die Bestandteile von Suspensionen, Emulsionen und/oder Gasgemischen getrennt werden. Die gerätegesteuerte Behandlung der mindestens einen Laborprobe entspricht bei einer Laborzentrifuge einer Rotationsbehandlung, der die mindestens eine Probe unterzogen wird. Mögliche Parameter, insbesondere Programmparameter, insbesondere Nutzerparameter, die zur Beeinflussung einer Rotationsbehandlung verwendet werden, definieren insbesondere eine Temperatur der Laborzentrifuge, eine Rotationsgeschwindigkeit der Laborzentrifuge, einen zeitlichen Parameter der Rotation oder Temperatureinstellung, und/oder mindestens einen Ablaufparameter, der den Ablauf, insbesondere die Reihenfolge, eines aus mehreren Rotationsschritten bestehenden Rotationsprogramms beeinflusst oder definiert. Die Temperatur der Laborzentrifuge kann insbesondere mindestens eine Temperatur im Inneren des mindestens einen Rotors sein, insbesondere mindestens eine Temperatur mindestens einer Probe.

Ein **Thermocycler** ist ein Gerät, das in der Lage ist, die Temperatur mindestens einer Probe zeitlich nacheinander auf eine vorbestimmte Temperatur einzustellen und für eine vorgegebene Dauer auf dieser Temperaturstufe zu halten. Der Ablauf dieser Temperatursteuerung ist zyklisch. Das heißt ein vorbestimmter Temperaturzyklus, also eine Abfolge von mindestens zwei Temperaturstufen, wird wiederholt durchgeführt. Dieses Verfahren dient insbesondere der Durchführung einer Polymerase-Kettenreaktion (PCR). In diesem Zusammenhang bezeichnet man einen Thermocycler auch manchmal als PCR-Block. Ein Thermocycler, insbesondere die Behandlungseinrichtung des Thermocyclers, weist vorzugsweise einen Thermoblock auf. Ein Thermoblock ist ein Probenhalter aus einem wärmeleitenden Material, meistens ein metallhaltiges Material oder ein Metall, insbesondere Aluminium oder Silber. Der Probenhalter weist eine Kontaktierseite auf, die durch mindestens eine Heiz-/Kühleinrichtung des Thermocyclers, insbesondere ein Peltierelement, kontaktiert wird. Der Thermocycler, insbesondere die Behandlungseinrichtung des Thermocyclers, weist eine Regeleinrichtung mit mindestens einem Regelkreis auf, dem als Stellglied die mindestens eine Heiz-/Kühleinrichtung und als Messglied mindestens eine Temperaturmesseinrichtung zugeordnet sind. Mittels der Regeleinrichtung wird die Temperatur einer Temperaturstufe geregelt. Ein Kühlkörper des Thermocyclers, insbesondere der Behandlungseinrichtung des Thermocyclers, dient zur Kühlung von Abschnitten des Thermocyclers, insbesondere der Kühlung der Peltierelemente. Der Thermocycler, insbesondere die Behandlungseinrichtung des Thermocyclers, kann weitere Heiz- und/oder Kühlelemente aufweisen. Vorzugsweise weist der Thermocycler, insbesondere die Behandlungseinrichtung des Thermocyclers, eine Zeitgebereinrichtung auf, mit der zeitliche Parameter der Einstellung des Temperaturzyklus steuerbar sind. Die gerätegesteuerte Behandlung der mindestens einen Laborprobe entspricht bei einem Thermocycler einer Temperaturzyklusbehandlung, der die mindestens eine Probe unterzogen wird. Mögliche Parameter, insbesondere Programmparameter, insbesondere Nutzerparameter, die zur Beeinflussung einer Temperaturzyklusbehandlung verwendet werden, definieren insbesondere die Temperatur einer Temperaturstufe, die Dauer einer Temperaturstufe, die Steuerung weiterer Heiz- und/oder Kühlelemente, und/oder die Anzahl von Temperaturstufen oder Zyklen, und/oder mindestens einen Ablaufparameter, der den Ablauf, insbesondere die Reihenfolge, eines aus mehreren Schritten bestehenden Temperaturkontrollprogramms beeinflusst oder definiert.

Ein **Labor-Spektralphotometer** ist ein Gerät, das durch das Beleuchten mindestens eines Messvolumens mindestens einer Laborprobe meist über das gesamte Spektrum von infrarot bis ultraviolett des sichtbaren Lichtes die Remissionswerte ermittelt. Die Remission bezeichnet die Situation, dass ein Messvolumen einen Teil des Lichtspektrums absorbiert und einen Teil des Spektrums transmittiert (transparente Medien) bzw. reflektiert (undurchsichtige Medien). Mit dem Labor-Spektralphotometer wird insbesondere das Absorptionsvermögen einer Probe in Abhängigkeit von der Lichtwellenlänge gemessen. Darüber hinaus besteht insbesondere die Möglichkeit, den Anwendungsbereich des Labor-Spektralphotometers durch verschiedene Module zu erweitern. So ist z.B. die Anordnung eines Fluoreszenz-Moduls zur Messung von Fluoreszenz oder eines Temperiermoduls zur Temperierung der Probe im Spektrometer denkbar. Das gemessene Absorptionsspektrum enthält insbesondere die bei bestimmten Wellenlängen gemessenen Lichtintensitäten. Das Absorptionsspektrum ist charakteristisch für die Laborprobe bzw. den darin enthaltenen Stoff oder die Stoffe. Dies kann zur qualitativen Analyse der Laborprobe genutzt werden. Ist die flüssige Probe bzw. der darin gelöste Stoff bekannt, kann durch Messung der Absorption die Konzentration des gelösten Stoffes ermittelt werden. Dies kann zur quantitativen Analyse der Laborprobe genutzt werden. Das Labor-Spektralphotometer, insbesondere die Behandlungseinrichtung des Labor-Spektralphotometers, weist vorzugsweise mindestens eine Lichtquelle auf, vorzugsweise mindestens einen Zeitgeber, vorzugsweise mindestens einen Photodetektor. Die gerätegesteuerte Behandlung der mindestens einen Laborprobe entspricht bei einem Labor-Spektralphotometer einer Licht- und Messbehandlung, der die mindestens eine Probe unterzogen wird. Mögliche Parameter, insbesondere Programmparameter, insbesondere Nutzerparameter, die zur Beeinflussung einer Licht- und Messbehandlung verwendet werden, definieren insbesondere das optische Lichtspektrum, mit dem die mindestens eine Probe bestrahlt wird und/oder mindestens einen Ablaufparameter, der den Ablauf, insbesondere die Reihenfolge, eines aus mehreren Schritten bestehenden Licht- und Messbehandlungsprogramms beeinflusst oder definiert.

Ein **Zellenzählgerät** dient dem Zählen von biologischen Zellen, bzw. Partikeln, die in einer Laborprobe enthalten sind. Es gibt verschiedene physikalische Prinzipien, die zum Zählen von Zellen in Frage kommen, insbesondere optische Verfahren, bei denen die zu messende Laborprobe in einer Zählkammer angeordnet wird, insbesondere bei automatisch arbeitenden zusätzlich beleuchtet wird und ein Bild der in der Zählkammer angeordneten Zellen bzw. Partikel erfasst wird und ausgewertet wird. Ein weiteres etabliertes Verfahren ist die Impedanzmessung: ein als Coulter Counter ausgeführtes Zellenzählgerät leitet die, die Zellen enthaltende Laborprobe durch eine Apertur ("Messschleuse"). Jeder Durchtritt einer Zelle durch die Apertur wird als zählbares Ereignis elektrisch detektiert. Optische Zellenzählgeräte, insbesondere die Behandlungseinrichtung des Zellenzählgeräts, weisen je nach Ausführung vorzugsweise mindestens eine Lichtquelle auf, mindestens eine Bilderfassungseinrichtung und mindestens eine Bildauswerteeinrichtung, zusätzlich u.U. eine Positioniereinrichtung. Die gerätegesteuerte Behandlung der mindestens einen Laborprobe entspricht bei einem optischen Zellenzählgerät z.B. einer Licht- und Messbehandlung, bei einem nach dem Coulter Prinzip arbeitenden Gerät einer Pump- und Messbehandlung, der die mindestens eine Probe unterzogen wird. Mögliche Parameter, insbesondere Programmparameter, insbesondere Nutzerparameter, die zur Beeinflussung einer Licht- und Messbehandlung oder der Pump- und Messbehandlung verwendet werden, definieren insbesondere die Lichtintensität der Lichtquelle, mit dem die mindestens eine Probe bestrahlt wird und/oder mindestens einen Ablaufparameter, der den Ablauf, insbesondere die Reihenfolge, eines aus mehreren Schritten bestehenden Licht- und Messbehandlungsprogramms oder Pump- und Messbehandlungsprogramms beeinflusst oder definiert. Bei optischen Zählgeräten sind außerdem die für die Bildauswertung notwendigen Algorithmen, deren Reihenfolge und Parametrierung entscheidend für die Aussagekraft des Messergebnisses, sind ???. Optische Messgeräte, aber auch Coulter Counter, nutzen oft Zählkammern zum einmaligen Gebrauch ("Consumables)", dies sind den herkömmlichen Neubauerzählkammern nachempfundene Kunststoffartikel, bzw., bei den Coulter Countern, "Lab-on-a-Chip"- ähnliche Einmalzählkammern. Es gibt aber auch Geräte, die ohne diese Verbrauchsmaterialien arbeiten (z.B. "CASY").

Ein **Labor-Inkubator** ist ein Gerät, mit dem kontrollierte Klimabedingungen für verschiedene biologische Entwicklungs- und Wachstumsprozesse geschaffen und erhalten werden können. Er dient der Schaffung und Erhaltung eines Mikroklimas mit geregelten Gas-, und/oder Luftfeuchtigkeits- und/oder Temperatur-Bedingungen in einem Inkubatorraum, wobei diese Behandlung zeitabhängig sein kann. Der Labor-Inkubator, insbesondere die Behandlungseinrichtung des Labor-Inkubators, weist insbesondere einen Zeitgeber auf, insbesondere eine Zeitschaltuhr, eine Heiz-/Kühleinrichtung und vorzugsweise eine Einstellung für die Regelung eines dem Inkubatorraum zugeführten Austauschgases, insbesondere Frischluft, eine Einstelleinrichtung für die Zusammensetzung des Gases im Inkubatorraum des Labor-Inkubators, insbesondere zur Einstellung des CO₂ und/oder des O₂ Gehalts des Gases und/oder eine Einstelleinrichtung zur Einstellung der Luftfeuchtigkeit im Inkubatorraum des Labor-Inkubators. Der Labor-Inkubator, insbesondere die Behandlungseinrichtung des Labor-Inkubators, weist insbesondere den Inkubatorraum auf, ferner vorzugsweise eine Regeleinrichtung mit mindestens einem Regelkreis, dem als Stellglied die mindestens eine Heiz-/Kühleinrichtung und als Messglied mindestens eine Temperaturmesseinrichtung zugeordnet sind. Mittels der Regeleinrichtung kann die Temperatur im Inkubator geregelt werden. CO₂-Inkubatoren dienen insbesondere der Kultivierung tierischer bzw. humaner Zellen. Inkubatoren können Wendevorrichtungen zum Wenden der mindestens einen Laborprobe und/oder eine Schütteleinrichtung zum Schütteln bzw. Bewegen der mindestens einen Laborprobe aufweisen. Die gerätegesteuerte Behandlung der mindestens einen Laborprobe entspricht bei einem Labor-Inkubator einer Klimabehandlung, der die mindestens eine Probe unterzogen wird. Mögliche Parameter, insbesondere Programmparameter, insbesondere Nutzerparameter, die zur Beeinflussung einer Klimabehandlung verwendet werden, definieren insbesondere die Temperatur des Inkubatorraums, in dem die mindestens eine Probe inkubiert wird, den O₂- und/oder CO₂-Partialdruck im Inkubationsinnenraum, die Luftfeuchtigkeit im Inkubationsinnenraum und/oder mindestens einen Ablaufparameter, der den Ablauf, insbesondere die Reihenfolge, eines aus mehreren Schritten bestehenden Inkubationsbehandlungsprogramms beeinflusst oder definiert.

Ein **Labor-Schüttelgerät** dient der Bewegung einer Laborprobe, insbesondere zum Mischen einer mehrere Bestandteile aufweisenden Laborprobe. Labor-Schüttelgeräte gibt es in verschiedenen Ausführungen, insbesondere als Überkopf-Schüttelgeräte oder als Flachbett-Schüttelgeräte. Labor-Schüttelgeräte können eine Temperierfunktion zum Temperieren der mindestens einen Laborprobe aufweisen, und können insbesondere eine Inkubatorfunktion zum Inkubieren der mindestens einen Laborprobe bei kontrollierten Klimabedingungen aufweisen. Labor-Schüttelgeräte, insbesondere deren Behandlungseinrichtung, können insbesondere zur Durchführung einer oszillierenden Bewegung eingerichtet sein. Labor-Schüttelgeräte, insbesondere deren Behandlungseinrichtung, weisen insbesondere einen Antrieb zum Antreiben der Bewegung auf, weisen insbesondere eine Zeitgebereinrichtung auf, mit der zeitliche Parameter der Einstellung der Schüttelbehandlung steuerbar sind und weisen insbesondere mindestens eine Heiz-/Kühleinrichtung und mindestens eine Regeleinrichtung mit mindestens einem Regelkreis, dem als Stellglied die mindestens eine Heiz-/Kühleinrichtung und als Messglied mindestens eine Temperaturmesseinrichtung zugeordnet sind. Die gerätegesteuerte Behandlung der mindestens einen Laborprobe entspricht bei einem Labor-Schüttelgerät einer Schüttelbehandlung, der die mindestens eine Probe unterzogen wird. Mögliche Parameter, insbesondere Programmparameter, insbesondere Nutzerparameter, die zur Beeinflussung einer Schüttelbehandlung verwendet werden, definieren insbesondere die Bewegungsintensität, insbesondere die Bewegungsfrequenz bei einem oszillierenden Antrieb, einer Zeitperiode bei der Schüttelbehandlung, und/oder mindestens einen Ablaufparameter, der den Ablauf, insbesondere die Reihenfolge, eines aus mehreren Schritten bestehenden Schüttelbehandlungsprogramms beeinflusst oder definiert.

Ein **Labor-Mischer,** auch bezeichnet als "mixing device", dient wie das Labor-Schüttelgerät der Bewegung einer Laborprobe, insbesondere zum Mischen einer mehrere Bestandteile aufweisenden Laborprobe. Im Vergleich zu einem Labor-Schüttelgerät ermöglicht ein Labor-Mischer Bewegungen mit höheren Frequenzen, insbesondere höheren Drehzahlen. Labor-Mischer, insbesondere deren Behandlungseinrichtung, können insbesondere zur Durchführung einer oszillierenden Bewegung eingerichtet sein. Labor-Mischer, insbesondere deren Behandlungseinrichtung, weisen insbesondere einen Antrieb zum Antreiben der Bewegung auf, weisen insbesondere eine Zeitgebereinrichtung auf, mit der zeitliche Parameter der Einstellung der Mischbehandlung steuerbar sind und weisen insbesondere mindestens eine Heiz-/Kühleinrichtung und mindestens eine Regeleinrichtung mit mindestens einem Regelkreis, dem als Stellglied die mindestens eine Heiz-/Kühleinrichtung und als Messglied mindestens eine Temperaturmesseinrichtung zugeordnet sind. Die gerätegesteuerte Behandlung der mindestens einen Laborprobe entspricht bei einem Labor-Mischer einer Mischbehandlung, der die mindestens eine Probe unterzogen wird. Mögliche Parameter, insbesondere Programmparameter, insbesondere Nutzerparameter, die zur Beeinflussung einer Mischbehandlung verwendet werden, definieren insbesondere die Bewegungsintensität, insbesondere die Bewegungsfrequenz bei einem oszillierenden Antrieb, einer Zeitperiode bei der Mischbehandlung, und/oder mindestens einen Ablaufparameter, der den Ablauf, insbesondere die Reihenfolge, eines aus mehreren Schritten bestehenden Mischbehandlungsprogramms beeinflusst oder definiert.

Ein **Labor-Gefriergerät** dient der Lagerung mindestens einer Laborprobe in einem Gefrierraum bei geregelten Temperaturen insbesondere im Tiefkühlbereich von -18° C bis -50 °C oder im Ultratiefkühlbereich von -50° C bis - 90° C. Ein Labor-Gefriergerät ist insbesondere kein Kühlschrank, der zum Kühlen bei Temperaturen insbesondere im Bereich von 0° C bis 10° C oder von - 10° C bis 10 °C verwendbar ist. Ein Labor-Gefriergerät, insbesondere die Behandlungseinrichtung des Labor-Gefriergeräts, weist insbesondere mindestens eine Kühleinrichtung und mindestens eine Regeleinrichtung mit mindestens einem Regelkreis auf, dem als Stellglied die mindestens eine Kühleinrichtung und als Messglied mindestens eine Temperaturmesseinrichtung zugeordnet sind. Ein Labor-Gefriergerät, insbesondere die Behandlungseinrichtung des Labor-Gefriergeräts, weist insbesondere ein Kontrollmessgerät zur Temperaturmessung und/oder insbesondere eine Alarmeinrichtung auf, mit der ein Alarmsignal ausgegeben wird, wenn die im Gefrierraum gemessene Temperatur einen erlaubten Temperaturbereich verlässt. Ein Labor-Gefriergerät, insbesondere die Behandlungseinrichtung des Labor-Gefriergeräts, kann insbesondere eine Informationsleseeinrichtung zum Lesen der Information aufweisen. Diese Information kann auf einem Informationsträger enthalten sein, der mit einem Artikel verbunden sein kann. Dieser Artikel kann insbesondere ein Probenbehälter sein, der mindestens eine Laborprobe enthalten kann. Der Informationsträger kann insbesondere einen RFID-Chip oder andere Identifikationsmerkmale aufweisen, wie z.B. einen Barcode, einen Datamatrix Code, einen QR-Code, die mit geeigneten Verfahren lesbar sind. Die gerätegesteuerte Behandlung der mindestens einen Laborprobe entspricht bei einem Labor-Gefriergerät einer Tieftemperaturbehandlung, der die mindestens eine Probe unterzogen wird. Mögliche Parameter, insbesondere Programmparameter, insbesondere Nutzerparameter, die zur Beeinflussung einer Tieftemperaturbehandlung verwendet werden, definieren insbesondere die Temperatur des Gefrierraumsraums, in dem die mindestens eine Probe tiefgekühlt wird und/oder den Informationslesevorgang, der vorzugsweise durchgeführt wird, wenn ein mit einem Informationsträger versehener Artikel von einem Benutzer in das Labor-Gefriergerät überführt wird.

Ein **Bioreaktor** weist einen Behälter auf, in dem bestimmte Mikroorganismen, Zellen oder kleine Pflanzen unter möglichst optimalen Bedingungen kultiviert (auch: fermentiert) werden. Der Betrieb eines Bioreaktors ist somit eine Anwendung der Biotechnologie, die biologische Prozesse, insbesondere Biokonversion oder Biokatalyse, in technischen Einrichtungen nutzt bzw. nutzbar macht. Faktoren, die in den meisten Bioreaktoren insbesondere durch Einstellung entsprechender Parameter steuerbar oder kontrollierbar sind, sind die Zusammensetzung des Nährmediums, die Sauerstoffzufuhr, Temperatur, pH-Wert, Sterilität und/oder andere Faktoren. Zweck der Kultivierung in einem Bioreaktor kann die Gewinnung der Zellen oder von Bestandteilen der Zellen oder die Gewinnung von Stoffwechselprodukten sein. Diese können z. B. als Wirkstoff in der pharmazeutischen oder als Grundchemikalie in der chemischen Industrie verwendet werden. Auch der Abbau von chemischen Verbindungen kann in Bioreaktoren stattfinden, wie z. B. bei der Abwasserreinigung in Kläranlagen. Die Herstellung von Bier, Wein und anderen derartigen Produkten findet ebenfalls in Bioreaktoren statt. In Bioreaktoren werden unterschiedlichste Organismen für verschiedene Zwecke kultiviert. Ein Bioreaktor kann deshalb unterschiedlich ausgeführt sein. Er kann als Rührkesselreaktor ausgeführt sein, der ein Volumen von wenigen Millilitern bis hunderten Litern haben kann und mit Nährlösung gefüllt werden kann. Er kann auch als Festbettreaktor, Photobioreaktor verwendet werden bzw. ausgebildet sein. Ein Bioreaktor kann Teil eines Bioreaktor-Systems sein, vorzugsweise eines parallelen Bioreaktor-Systems. In einem solchen parallelen Bioreaktor-System wird eine Vielzahl von Bioreaktoren parallel betrieben und mit höherer Präzision kontrolliert. Ein Bioreaktor, insbesondere dessen Behandlungseinrichtung, weist insbesondere eine Rühreinrichtung auf zum Rühren der im Reaktorbehälter enthaltenen Probe, insbesondere des Nährmediums. Ein Bioreaktor, insbesondere dessen Behandlungseinrichtung, weist insbesondere eine Pumpeinrichtung zum Pumpen der vorzugsweise als Nährmedium ausgeführten Laborprobe auf. Ein Bioreaktor, insbesondere dessen Behandlungseinrichtung, weist insbesondere eine Einstelleinrichtung für die Einstellung eines Gasgehalts im Reaktorbehälter, insbesondere des Gehalts an CO₂ und/oder O₂ bzw. an Gelöstsauerstoff (DO) auf. Ein Bioreaktor, insbesondere dessen Behandlungseinrichtung, weist insbesondere eine Einstelleinrichtung für die Einstellung, insbesondere Regelung, eines pH-Werts in der Probe im Reaktorbehälter auf. Die gerätegesteuerte Behandlung der mindestens einen Laborprobe entspricht bei einem Bioreaktor insbesondere einer Nährmediumsbehandlung, der die mindestens eine vorzugsweise als Nährmedium ausgeführte Probe unterzogen wird. Mögliche Parameter, insbesondere Programmparameter, insbesondere Nutzerparameter, die zur Beeinflussung einer Nährmediumsbehandlung verwendet werden, definieren insbesondere die Temperatur des Nährmediums im Reaktorbehälter, und/oder die Geschwindigkeit der Rühreinrichtung, insbesondere Rotationsgeschwindigkeit, und/oder die Pumpgeschwindigkeit bzw. Dosiergeschwindigkeit, und/oder einen Gasgehalt im Nährmedium, insbesondere CO₂ und/oder O₂ bzw. Gelöstsauerstoff (DO), und/oder den pH-Wert des Nährmediums, und/oder mindestens einen Ablaufparameter, der den Ablauf, insbesondere die Reihenfolge, eines aus mehreren Schritten bestehenden Nährmediumsbehandlungsprogramms beeinflusst oder definiert.

Eine **Sicherheitswerkbank** dient insbesondere zur sicheren Lagerung oder Aufbewahrung von Gefahrenstoffen, insbesondere zur Erfüllung einer biologischen Schutzstufe. Diese Stufen sind insbesondere in der EU-Richtlinie 2000/54/EG über den Schutz der Arbeitnehmer gegen Gefährdung durch biologische Arbeitsstoffe bei der Arbeit normiert sowie in der Biostoffverordnung in Deutschland. Eine Sicherheitswerkbank soll verhindern, dass im Falle der Gefahrenentstehung bei in einer Sicherheitswerkbank gelagerten Laborproben die Umwelt gefährdet wird. Die Sicherheit wird insbesondere dadurch gewährleistet, dass die im Aufnahmebereich der Sicherheitswerkbank enthaltene Atmosphäre ausgetauscht und insbesondere gefiltert wird. Dabei wird insbesondere diese Atmosphäre von einer Fördereinrichtung durch den Aufnahmebereich gefördert und durch einen Filter bewegt, der die Atmosphäre filtert, insbesondere von Gefahrstoffen reinigt. Die Sicherheitswerkbank, insbesondere dessen Behandlungseinrichtung, weist insbesondere eine Fördereinrichtung zum Befördern von Atmosphärengas auf, weist insbesondere eine Zeitgebereinrichtung zur Messung einer Filterbetriebsdauer und einer Lüfterbetriebsdauer auf und/oder weist insbesondere eine Messeinrichtung zur Messung einer geförderten Menge an Atmosphärengas auf. Die gerätegesteuerte Behandlung der mindestens einen Laborprobe entspricht bei einer Sicherheitswerkbank insbesondere einer Atmosphärengasbehandlung zur Behandlung des Atmosphärengases, in dem die mindestens eine Probe gelagert ist. Mögliche Parameter, insbesondere Programmparameter, insbesondere Nutzerparameter, die zur Beeinflussung einer Atmosphärengasbehandlung verwendet werden, definieren insbesondere die Temperatur des Atmosphärengases im Aufnahmebereich, und/oder die Strömungsgeschwindigkeit des von der Fördereinrichtung beförderten Atmosphärengases, die geförderte Luftmenge, die Filterbetriebsdauer, und/oder die Lüfterbetriebsdauer.

Ein **Probenplatten-Lesegerät,** auch bezeichnet als "plate reader" oder "microplate reader", ist ein Laborgerät zum Nachweis biologischer, chemischer oder physikalischer Ereignisse von Proben in Mikrotiterplatten. Sie sind weit verbreitet in der Forschung verwendet, Wirkstoffforschung, Bioassay Validierung, Qualitätskontrolle und Fertigungsprozesse in der pharmazeutischen und biotechnologischen Industrie und akademischen Organisationen. Das Probenplatten-Lesegerät kann insbesondere mindestens eine Lichtquelle oder Strahlungsquelle aufweisen, kann mindestens einen Photodetektor aufweisen, kann eine Temperaturkontrolleinrichtung zu Temperierung der Proben bzw. der Probenplatten aufweisen, kann einen Zeitgeber aufweisen. Probenreaktionen können in 6-1536 Well-Format Mikrotiterplatten getestet werden. Das häufigste Format für Probenplatten, insbesondere Mikrotiterplatten, das in akademischen Forschungslabors oder klinisch-diagnostische Laboratorien verwendet wird, ist eine 96-weil plate (eine 8 mal 12 Matrix) mit einem typischen Einzelvolumen zwischen 100 und 200 µl pro Well. Mikrotiterplatten mit höherer Dichte (384 - oder 1536-Well-Mikroplatten) werden typischerweise für Screening-Anwendungen verwendet, wenn Durchsatz (Anzahl der pro Tag verarbeiteten Proben) und Assay-Kosten pro Probe zu kritischen Parametern werden, mit einem typischen Assay-Volumen zwischen 5 und 50 µl pro Well. Die Behandlung ist insbesondere eine optische Messung der Mikrotiterplatte, insbesondere die Messung einer Absorption, Fluoreszenz-Intensität, Lumineszenz, zeitaufgelöste Fluoreszenz, und/oder Fluoreszenzpolarisation. Mögliche Parameter, insbesondere Programmparameter, insbesondere Nutzerparameter, die zur Beeinflussung einer Messung verwendet werden, definieren z.B. die Intensität der Lichtquelle, die Sensitivität eines Photodetektors, eine Zeitdauer und/oder eine Temperatur.

Ein **Laborautomat zur Behandlung von fluiden Proben,** insbesondere Pipettierautomat, dient der programmgesteuerten Behandlung dieser Proben. Ein Laborautomat kann ein Laborgerät sein oder mindestens ein Laborgerät der vorgenannten Art aufweisen, und/oder kann zur Durchführung mindestens einer, mehrerer oder aller der von diesem vorgenannten Laborgerät ausführbaren Behandlungen ausgebildet sein. Ein Laborautomat weist die Behandlungseinrichtung zur automatischen, programmgesteuerten Behandlung der mindestens einen Laborprobe auf, wobei die Behandlung unter Verwendung von mehreren Programmparametern, die zumindest teilweise vom Benutzer gewählt werden, gesteuert wird. Dabei kann die Probe vom Laborautomaten, bzw. einer Behandlungseinrichtung des Laborautomaten, beispielsweise bewegt und/oder transportiert werden. Die Bewegung kann durch Transport in beweglichen Probenbehältern oder durch die Leitung in Schlauchsystemen, Kapillaren oder Pipettenspitzen erfolgen. Dabei werden flüssige Proben insbesondere durch Ansaugen, also Pipettieren, oder allgemeiner, durch Anlegen von Druckdifferenzen transportiert. Durch eine Behandlung der Probe kann eine Probe z.B. geteilt oder verdünnt werden. Die Inhaltsstoffe einer Probe können analysiert werden oder es können, z.B. durch eine chemische Reaktion, neue Inhaltsstoffe hergestellt werden, insbesondere unter Verwendung der Probe. Insbesondere im Zusammenhang mit der Bearbeitung und Analyse von DNA oder RNA oder deren Bestandteilen sind Laborautomaten hilfreich, um eine Fülle von Informationen innerhalb einer geeigneten Zeitspanne zu gewinnen oder viele solcher Proben zu analysieren. Diese Behandlungseinrichtung eines Laborautomaten weist meist eine Arbeitsfläche mit Arbeitsstationen auf, an denen Proben in verschiedener Weise bearbeitet oder gelagert werden können. Für den Transport von z.B. flüssigen Proben zwischen verschiedenen Positionen, insbesondere Probenbehältern, weist die Behandlungseinrichtung meist eine gerätegesteuerte Bewegungsvorrichtung und eine gerätegesteuerte Fluid-TransferEinrichtung, die z.B. ein Pipettiersystem aufweisen kann, auf. Sowohl der Transport der Proben als auch deren Behandlung an den verschiedenen Stationen lässt sich gerätegesteuert durchführen, insbesondere programmgesteuert durchführen. Die Behandlung erfolgt dann vorzugsweise zumindest teilweise oder vollständig automatisiert.

Vorzugsweise kann der Benutzer des Laborautomaten die Art der Behandlung der Probe festlegen. Eine solche Behandlungsart kann insbesondere dienen:
der Nukleinsäureaufreinigung, insbesondere
   - "MagSep Blood gDNA": Aufreinigung von genomischer DNA aus Vollblut, insbesondere unter Verwendung des Eppendorf ® MagSep Blood gDNA Kits;
   - "MagSep Tissue gDNA": Aufreinigung von genomischer DNA aus lebendem Gewebe, insbesondere unter Verwendung des Eppendorf ® MagSep Tissue gDNA Kits;
   - "MagSep Viral DANN/RNA": Aufreinigung von viraler RNA oder DNA aus zellfreien Körperflüssigkeiten, insbesondere unter Verwendung des Eppendorf ® MagSep Viral DNA/RNA Kits;
und PCR-Anwendungen, insbesondere
   - "Compose Mastermix";
   - "Normalize Concentrations";
   - "Create Dilution Series";
   - "Setup Reactions".

Ein Laborgerät, insbesondere der Laborautomat vorzugsweise so ausgebildet, dass die Steuerung der Behandlung der mindestens einen Laborprobe automatisch unter Verwendung der erfassten Programmparameter erfolgen kann. Ein Laborgerät, insbesondere der Laborautomat, insbesondere dessen Steuerungsprogramm ist vorzugsweise so ausgebildet, dass die vom Benutzer vorgenommenen Eingaben, insbesondere der mindestens eine Wert mindestens eines Programmparameters, dazu verwendet werden, um gegebenenfalls weitere erforderliche Programmparameter automatisch zu ermitteln, insbesondere durch Berechnung oder durch Vergleich mit Daten in einer Datenbank des Laborautomaten. Insbesondere werden vorzugsweise die zur Durchführung der Behandlung im Einzelnen vorzugsweise zu verwendenden Steuerparameter automatisch bestimmt. Durch diese Maßnahmen wird die Bedienung des Laborgerätes komfortabel, der Benutzer erspart sich insbesondere das Entwerfen eines Programmcodes, da diese Schritte insbesondere automatisch vom Laborgerät durchgeführt werden. In einer bevorzugten Ausgestaltung der Erfindung werden vom Benutzer nur die Eingaben abgefordert, die direkt mit der durchzuführenden Behandlung der Proben zu tun haben. Das sind häufig dieselben Angaben, die auch für eine manuelle Durchführung der Behandlung notwendig wären und dem Benutzer geläufig sind. Dagegen müssen solche Parameter, die die Steuerung des Laborgerätes betreffen, insbesondere die Steuerparameter, nicht im Einzelnen festgelegt werden, da diese vorzugsweise automatisch festgelegt werden. Steuerparameter sind die zur Steuerung der technischen Bestandteile der Behandlungseinrichtung im Einzelnen erforderlichen Parameter. Steuerparameter können Programmparameter sein oder können daraus für die technische Umsetzung abgeleitete Parameter sein, insbesondere automatisch bestimmte Parameter sein.

Vorzugsweise wählt ein Laborgerät, insbesondere der Laborautomat, ausgehend von der vom Benutzer gewählten Behandlungsart automatisch den passenden Satz von Programmparametern aus, dessen benutzerseitig erforderliche Programmparameter dann in den Schritten (b) und (c) vom Benutzer abgefragt wird. Der Programmparametersatz kann einerseits die benutzerseitig erforderlichen Programmparameter enthalten, und kann andererseits weitere Programmparameter enthalten. Diese weiteren Programmparameter können in Abhängigkeit von der gewählten Behandlungsart automatisch festgelegt werden, oder können in Abhängigkeit von mindestens einem, oder allen, vom Benutzer eingegebenen Programmparametern automatisch festgelegt werden, und/oder können in der Speichereinrichtung gespeichert sein. Die gespeicherten Pararametersätze sind -oder werden vom Laborautomaten- vorzugsweise für die Behandlungsart optimiert, so dass der Benutzer vorzugsweise kein Spezialwissen zur Optimierung der Parameter benötigt. Aus dem Programmparametersatz werden die Steuerparameter abgeleitet, die zur Durchführung der konkreten Behandlung mittels der Behandlungseinrichtung notwendig sind.

Für eine Behandlungsart ist vorzugsweise ein Programmparametersatz von für diese Behandlungsart spezifischen Programmparametern definiert. Die Programmparameter dieses Programmparametersatzes können insbesondere die für die Behandlung zu verwendenden Zubehörteile, z.B. Probenbehältnis, Transportbehältnis, und/oder die zu verwendenden Tools, und/oder weiteres Verbrauchsmaterial definieren.

Die Zuordnung von Programmparametersatz und Behandlungsart ist in der Speichereinrichtung des Laborgerätes, insbesondere des Laborautomaten, gespeichert. Vorzugsweise ist der Laborgerät dazu ausgebildet, dass der Benutzer weiterer solcher Zuordnungen im Laborgerät speichern und/oder verwenden kann. Durch diese Zuordnung, in Kombination mit der übersichtlichen und gut strukturierten Abfrage der Programmparameter wird die Bedienung des Laborgerätes besonders effizient. Diese Zuordnung erfolgt vorzugsweise durch die Verwendung eines oder mehrere Programmmodule, wobei jeweils ein Programmmodul auf eine bestimmte Anwendung zugeschnitten ist:
Vorzugsweise weist das Laborgerät, insbesondere der Laborautomat, mindestens ein Programmmodul auf, wobei ein vorbestimmtes Programmmodul der Steuerung einer vorbestimmten Laboraufgabe zur Behandlung von Laborproben dient. Dadurch wird die Verwendung des Laborgerätes, insbesondere des Laborautomaten, noch flexibler.

Das Laborgerät, insbesondere der Laborautomat, kann vorzugsweise so verändert werden, dass damit weitere Behandlungsarten durchgeführt werden können. Dies kann dadurch geschehen, dass die dafür notwendigen Dateien und/oder Programme oder Programmbestandteile, insbesondere ein der Behandlungsart zugeordnetes Programmmodul, nachträglich in den Laborautomaten, insbesondere dessen Speichereinrichtung, übertragen werden.

Eine Laborprobe ist eine Probe, die in einem Labor behandelt werden kann. Anstelle des Begriffs Laborprobe wird bei der Beschreibung der Erfindung auch der Begriff "Probe" verwendet. Die Probe kann ein Fluid sein. Die Probe kann flüssig, gelartig, pulverförmig oder ein Festkörper sein, oder solche Phasen aufweisen. Die Probe kann ein Gemisch aus solchen Phasen sein, insbesondere ein Flüssigkeitsgemisch, eine Lösung, eine Suspension, z.B. eine Zellsuspension, eine Emulsion oder Dispersion. Eine Lösung ist ein homogenes Gemisch aus mindestens zwei Stoffen. Eine flüssige Probe kann eine solche sein, die üblicherweise in einem biologischen, chemischen, medizinischen Labor gehandhabt wird. Eine flüssige Probe kann eine Analysenprobe sein, ein Reagenz, ein Medium, ein Puffer etc. Eine Lösung weist einen oder mehrere gelöste feste, flüssige oder gasförmige Stoffe (Solute) auf, und weist ferner ein vorzugsweise flüssiges Lösungsmittel (Solvens) auf, das insbesondere den größeren Anteil oder größten Anteil des Volumens aufweist, das die Lösung bildet. Das Lösungsmittel kann selbst eine Lösung sein.

Die Behandlung einer Laborprobe(n), insbesondere bei einem Laborautomaten, kann einen oder mehrere der nachfolgend genannten Vorgänge, insbesondere gleichzeitig oder nacheinander, beinhalten:
- Transport der Laborprobe, insbesondere durch eine Transporteinrichtung, unter Wirkung der Gravitation und/oder einer durch den Laborautomaten bewirkten Kraft;
- berührungslose (nicht-invasive) physikalische Behandlung der Probe, insbesondere thermische Behandlung, insbesondere Erwärmen und/oder Kühlen, insbesondere geregeltes Temperieren der Probe; oder Gefrieren oder Auftauen der Probe, oder sonstiges thermisches Herbeiführen einer Phasenänderung der Probe, z.B. Verdampfen, Kondensieren etc; magnetische Behandlung der Probe; optische Behandlung der Probe, insbesondere Bestrahlen der Probe mit Strahlung, insbesondere Licht, insbesondere sichtbarem Licht, Infrarotlicht oder UV-Licht, oder Detektion von solcher Strahlung, insbesondere Fluoreszenzlicht, aus dieser Probe; magnetische Behandlung einer Probe mit magnetischen Bestandteilen, insbesondere magnetische Separation von magnetischen Bestandteilen, insbesondere "magnetic beads", von einer fluiden Phase der Probe; Bewegen der Probe, also Durchführen einer mechanischen Behandlung der Probe, insbesondere Schütteln, rotieren, oszillieren, vibrieren, zentrifugieren, akustische Behandlung, insbesondere mit Ultraschall, jeweils z.B. zum Zwecke des Mischens der Probe oder des Separierens von Bestandteilen innerhalb der Probe oder zum Transportieren der magnetischen Bestanteile aus der Probe heraus oder in die Probe hinein;

- invasive physikalische Behandlung der Probe, also Durchführen einer mechanischen Behandlung der Probe: Einbringen von Rührwerkzeug, z.B. Rührstab oder magnetischer Rührfisch in die Probe und Rühren, Einbringen einer Sonde für akustische oder Ultraschallbehandlung, Einbringen von Transportmitteln, insbesondere Transportbehältnissen in die Probe, z.B. Dispenserspitze oder Pipettenspitze, oder Hohlnadel oder Schlauch; Zugabe von anderen Hilfsmitteln in die Probe;
- chemische, biochemische oder biomedizinische Behandlung der Probe: Zugabe von chemischen (z.B. Reaktant, Reagenz, Solvens, Solut) biochemischen (z.B. biochemische Makromoleküle, z.B. DNA, DNA-Bestandteile; pharmazeutische Wirkstoffe), oder biomedizinischen (z. B. Blut, Serum, Zellmedium) Stoffen;
- Lagerung der Probe, insbesondere für einen programmgesteuert definierten Zeitraum, insbesondere unter bestimmten physikalische Bedingungen, z.B. bei bestimmter Temperatur, Temperaturen, oder Temperaturwechseln, insbesondere wiederholten Temperaturwechseln, z.B. zyklisch und/oder periodisch wiederholten Temperaturwechseln, und/oder Einstellen eines Umgebungsdrucks, z.B. Anlegen eines Überdrucks oder eines Unterdrucks, insbesondere eines Vakuums, und/oder Einstellen einer definierten Umgebungsatmosphäre, z.B. ein Schutzgas oder eine bestimmte Luftfeuchtigkeit, unter bestimmten Strahlungsbedingungen, z.B. abgeschirmt gegen sichtbares Licht, im Dunkeln, oder unter definierter Bestrahlung;
- Messung oder Analyse der Probe, insbesondere Analyse durch eine nicht-invasive und/oder invasive Behandlung der Probe, insbesondere um mindestens eine oder mehrere chemische, physikalische, biochemische und/oder medizinische Eigenschaften der Probe zu messen; insbesondere Zählen von Zellen mittels Cell-Counter;
- Bearbeitung der Probe, insbesondere Änderungen mindestens einer Eigenschaft der Probe, insbesondere mittels nicht-invasiver und/oder invasiver Behandlung der Probe.

Diese Behandlung erfolgt insbesondere programmgesteuert, unter Verwendung mindestens eines Programmparameters.

Diese Behandlung erfolgt insbesondere gemäß mindestens einem Steuerparameter, der die Behandlung der Laborprobe mittels der Behandlungseinrichtung bestimmt. Ein Steuerparameter kann einen Zeitraum festlegen, einen Zeitpunkt, ein bestimmtes Probenvolumen und/oder Dosiervolumen, eine bestimmte Probentemperatur, etc. Ein Steuerparameter kann die automatische Verwendung eines bestimmten Transportkopfes, eines bestimmten Typs eines Transportbehältnisses, eines bestimmten Typs von Probebehältnissen, einer oder mehrerer individuelle Proben oder von bestimmten Positionen dieser Komponenten im Arbeitsbereich betreffen. Ein Steuerparameter kann die Behandlung einer individuellen Probe betreffen oder die Behandlung mehrerer oder vieler Proben.

Vorzugsweise wird ein Steuerparameter in Abhängigkeit von mindestens einem Programmparameter automatisch vom Laborgerät, insbesondere Laborautomat, ausgewählt, insbesondere automatisch in Abhängigkeit von den vom Benutzer ausgewählten Programmparametern automatisch ausgewählt. Dadurch hat der Benutzer den Vorteil, dass er nicht alle Steuerparameter einzeln bestimmen muss. Der Benutzer muss keine Kenntnisse über die Programmierung des Laborgerätes besitzen. Vielmehr erfolgt die Auswahl der für die Behandlung notwendigen Steuerparameter mittels der vom Benutzer eingegebenen Programmparameter. Dadurch ist die Verwendung des Laborgerätes besonders komfortabel.

Ein Steuerparameter kann auch einem Programmparameter entsprechen.

Der Transport einer Probe kann ein Transport aus einem Probenbehältnis in ein Trans**portbehältnis** und/oder aus dem Transportbehältnis in ein Probenbehältnis oder einen sonstigen Zielort sein. Dieser Transport erfolgt insbesondere programmgesteuert, unter Verwendung mindestens eines Programmparameters.

Das Transportbehältnis kann z.B. ein Dispenserbehältnis sein, das einen beweglichen Kolben und eine Einlass-/Auslassöffnung aufweist. Der Kolben erzeugt einen Unterdruck bzw. Überdruck im Dispenserbehältnis und saugt so die Probe in das Behältnis hinein oder gibt sie wieder ab. Dieser Vorgang folgt dem Verdrängerprinzip, d.h. die zu bewegende, meist flüssige und somit inkompressible Probe wird zwangsbewegt, indem das zuvor von der Probe eingenommene Volumen vom Kolben bewegt wird. Der Kolben wird in der Regel von einer Bewegungseinrichtung bewegt, insbesondere programmgesteuert bewegt, die dem Laborautomaten zugeordnet ist.

Das Transportbehältnis kann ferner eine Pipettenspitze sein. Eine Pipettenspitze weist eine Einlass-/Auslassöffnung auf, und eine zweite Öffnung. Die zweite Öffnung wird an eine Ansaugeinrichtung gekoppelt, so dass durch einen Unterdruck eine flüssige Probe aus einem Probenbehältnis in das Transportbehältnis gesaugt (pipettiert) werden kann. Die Abgabe der Probe erfolgt durch Ventilieren des Ansaugbereichs, mittels Gravitation und/oder über einen Überdruck, der z.B. über die zweite Öffnung im Pipettenspitze erzeugt wird.

Das Transportbehältnis besteht vorzugsweise teilweise oder vollständig aus Kunststoff. Es ist vorzugsweise ein Verbrauchsartikel, der typischer Weise nur für eine Behandlung oder eine geringe Zahl von Behandlungsschritten der Probe verwendet wird. Das Transportbehältnis kann aber auch teilweise oder vollständig aus einem anderen Material bestehen.

Der Transport einer Probe kann ein Transport der Probe von einer Ausgangsposition in eine Zielposition sein. Die Ausgangsposition kann vorliegen, wenn die Probe in einem ersten Probenbehältnis angeordnet ist und die Zielposition dieser Probe kann ihre Position in einem zweiten Probenbehältnis sein, in das die Probe übertragen wird. Diese Art des Transports wird vorliegend auch als Probentransfer oder Transfer bezeichnet. Ein Probentransfer wird in der Praxis meist durchgeführt, um eine Probe aus einem Vorratsbehältnis, in dem z.B. die Probe gelagert war und/oder das z.B. eine größere Menge der Probe enthalten kann, in ein zweites Probenbehältnis zu übertragen, in dem die Probe weiter behandelt wird. Dieser Transport erfolgt insbesondere programmgesteuert, unter Verwendung mindestens eines Programmparameters.

Das Transportbehältnis ist vorzugsweise mit einer Transporteinrichtung des Laborautomaten verbunden oder verbindbar.

Ein **Probenbehältnis** kann ein Einzelbehältnis sein, in dem nur eine einzige Probe enthalten ist, oder kann ein Mehrfachbehältnis sein, in dem mehrere Einzelbehältnisse miteinander verbunden angeordnet sind.

Ein Einzelbehältnis kann ein offenes Behältnis oder ein verschließbares Behältnis sein. Bei einem verschließbaren Behältnis kann ein Deckelelement, insbesondere eine Verschlusskappe, vorgesehen sein. Das Deckelelement kann fest mit dem Behältnis verbunden sein, z.B. als Klappdeckel oder Klappverschlusskappe, oder kann als separate Komponente verwendet werden.

Vorzugsweise sind bei einem Mehrfachbehältnis die mehreren Einzelbehältnisse in festen Positionen zueinander angeordnet, insbesondere entsprechend den Kreuzungspunkten eines Gittermusters angeordnet. Die vereinfacht die automatisierte Ansteuerung der Positionen und insbesondere die individuellen Adressierung von Proben. Ein Mehrfachbehältnis kann als Plattenelement ausgebildet sein, bei dem die Einzelbehältnisse so verbunden sind, dass sie eine plattenförmige Anordnung bilden. Die Einzelbehältnisse können als Vertiefungen in einer Platte ausgebildet sein oder können über Stegelemente miteinander verbunden sein. Das Plattenelement kann ein Rahmenelement aufweisen, in dem die Einzelbehältnisse gehalten werden. Diese Verbindungen von Komponenten können integrale Verbindungen sein, d.h. stoffschlüssige Verbindungen und/oder durch einen gemeinsamen Spritzgussprozess erzeugte Verbindungen sein, oder können kraftschlüssig (englisch "force-fit") und/oder formschlüssig (englisch "form-fit") erzeugt sein. Das Plattenelement kann insbesondere eine Mikrotiterplatte sein.

Mehrfachbehältnisse können eine Mehrzahl (von 2 bis 10) Einzelbehältnissen aufweisen. Sie können ferner eine Vielzahl (größer 10) aufweisen, typischer Weise 12, 16, 24, 32, 48, 64, 96, 384, 1536 Einzelbehältnisse. Das Mehrfachbehältnis kann insbesondere eine Mikrotiterplatte sein. Eine Mikrotiterplatte kann gemäß einem oder mehreren Industriestandard(s) ausgebildet sein, insbesondere der Industrienormen ANSI/SBS 1-2004, ANSI/SBS 2-2004, ANSI/SBS 3-2004, ANSI/SBS 4-2004.

Das maximale Probenvolumen, das von einem Transportbehältnis oder einem Probenbehältnis aufnehmbar ist, liegt typischer Weise zwischen 0,01 ml und 100 ml, insbesondere bei 10 - 100 µl, 100 - 500 µl, 0,5 - 5 ml, 5-25 ml, 25-50 ml, 50-100 ml, abhängig vom Typ des gewählten Transportbehältnis oder Probengefäßes.

Ein Probenbehältnis kann einen Informationsbereich aufweisen, der Informationen über das Probenbehältnis oder über dessen Inhalt aufweisen kann. Der Informationsbereich kann codierte Information aufweisen, z.B. einen Barcode oder QR-Code, oder einen RFID-Chip, oder eine anders codierte Information. Die Information kann Information zur Identifizierung der Probe und/oder eines Probenbehältnisses aufweisen. Der Laborautomat kann eine Informationsleseeinrichtung aufweisen, um diese Information zu lesen und, vorzugsweise der Steuereinrichtung zur Verfügung zu stellen.

Das Probenbehältnis besteht vorzugsweise teilweise oder vollständig aus Kunststoff. Es ist vorzugsweise ein Verbrauchsartikel, der typischer Weise nur für eine Behandlung oder eine geringe Zahl von Behandlungsschritten der Probe verwendet wird. Das Probenbehältnis kann aber auch teilweise oder vollständig aus einem anderen Material bestehen.

Das Probenbehältnis ist vorzugsweise mit einer Transporteinrichtung des Laborautomaten transportierbar.

Das Laborgerät, insbesondere der Laborautomat, ist vorzugsweise dazu ausgebildet, eine Vielzahl von Proben nacheinander und/oder parallel zu behandeln. Insbesondere ist ein Laborgerät, insbesondere der Laborautomat, vorzugsweise dazu ausgebildet, eine Vielzahl von Probengefäßen, insbesondere Einzelbehältnisse und/oder Mehrfachbehältnisse, programmgesteuert zu behandeln, insbesondere zu transportieren, zu entleeren und/oder zu befüllen.

Vorzugsweise weist ein Laborgerät, insbesondere der Laborautomat, genau einen Arbeitsbereich auf. Ein solches Laborgerät ist kompakt und kann sich insbesondere zur Verwendung auf einem Labortisch eignen, wobei er dann insbesondere auch als Tischgerät bezeichnet wird. Der Tisch kann z.B. die Workbench eines chemischen, biochemischen oder biomedizinischen Labors sein. Das Laborgerät kann auch zur Aufstellung in einem solchen Labor ausgebildet sein. Ein Laborgerät mit einem Arbeitsbereich kann ferner als unabhängig arbeitendes Gerät eines solchen Labors ausgebildet sein, oder kann in einen Geräteverbund eingebunden sein/werden.

Das Laborgerät, insbesondere der Laborautomat, kann auch als Laborstraße ausgebildet sein, bei dem mehrere Arbeitsbereiche so benachbart angeordnet sind, dass mittels eine Transportvorrichtung eine, mehrere oder eine Vielzahl von Proben, nacheinander und/oder parallel zwischen den Arbeitsbereichen transportiert werden können. Ein Arbeitsbereich einer Laborstraße ist vorzugsweise dazu ausgebildet, dass eine bestimmte Laboraufgabe, betreffend meistens die parallele und/oder sequentielle Behandlung einer Vielzahl von Proben, durchgeführt wird. Durch diese Spezialisierung jedes Arbeitsbereichs wird ein hoher Arbeitsdurchsatz der Laborstrasse erreicht. Zur Durchführung einer solchen bestimmten Aufgabe kann vorgesehen sein, dass in jedem Arbeitsbereich nur eine Art der Behandlung mindestens einer Probe, oder nur wenige Arten der Behandlung, z.B. zwei bis zehn Behandlungsarten durchgeführt werden. An jeder Arbeitsstation kann zur Durchführung einer Behandlung eine Behandlungseinrichtung angeordnet sein, die für ein bestimmtes Laborgerät, wie im Rahmen der Beschreibung der Erfindung beschrieben, charakteristisch ist. Die Transportvorrichtung kann ein Schienensystem aufweisen und/oder eine Robotereinrichtung zum programmgesteuerten Bewegen von Proben bzw. Probenbehältnissen.

Ein Laborgerät, insbesondere Laborautomat, kann mit einem LIMS verbunden oder verbindbar sein. LIMS steht für Labor-Informations- und Management-System. Ein LIMS ist in bekannter Weise ein Softwaresystem, das die Datenverarbeitung im chemischen, physikalischen, biologischen, medizinischen automatischen oder teilautomatischen Labor betrifft. Solche Daten können aus Messungen der Proben stammen, und/oder können die Steuerung der Bearbeitung der Daten betreffen. Ein LIMS dient vorzugsweise der Messwerterfassung und der Messwertauswertung. LIMS wird dazu verwendet, um den Arbeitsdurchsatz in einem Labor zu steigern und/oder die Effizienz der Behandlung von Laborproben zu optimieren.

Ein Arbeitsbereich kann eine vorzugsweise im Wesentlichen planar, vorzugsweise horizontal angeordnete Arbeitsfläche aufweisen. Der Arbeitsbereich kann mehrere vorbestimmte Arbeitsstationen aufweisen. Eine Arbeitsstation kann einem Abschnitt des Arbeitsbereichs zugeordnet sein. Dieser Zuordnung kann fest sein oder kann programmgesteuert bestimmt werden. Eine Arbeitsstation kann fest konfiguriert sein oder kann unterschiedlich bestückbar sein.

Die Position der Arbeitsstationen, und/oder der Zustand der Bestückung der Arbeitsstation, können als Information im Laborautomaten, insbesondere der Speichereinrichtung, gespeichert sein. Diese Information kann verwendet werden, um die programmgesteuerte Behandlung von Proben zu ermöglichen, die an bestimmten Positionen des Arbeitsbereichs angeordnet sind, und die an einer oder mehrer dieser Arbeitsstationen behandelt werden sollen.

Eine Arbeitsstation kann zur Lagerung von Stoffen dienen, z.B. zur Lagerung von Proben, Reinigungsmitteln, Abfall.

Eine Arbeitsstation kann zur Lagerung von Werkzeugelementen dienen.

Ein Werkzeugelement kann z.B. ein Transportkopf für den Fluidtransfer sein, insbesondere ein Pipettierkopf, der einen Verbindungsabschnitt zur Verbindung von einer Pipettenspitze (Einkanalpipettierkopf) oder zur Verbindung von mehreren Pipettenspitzen (Mehrkanalpipettierkopf) mit dem Pipettierkopf aufweisen kann. Über mindestens einen druck- und gasdichten Kanal, der mit dem Pipettierkopf verbunden ist, lässt sich Flüssigkeit in die mindestens eine Pipettenspitze saugen, wenn diese mit dem Verbindungsabschnitt verbunden ist. Dieses Pipettieren erfolgt beim Laborautomaten insbesondere programmgesteuert, insbesondere beeinflusst durch mindestens einen Programmparameter. Der Transportkopf kann auch ein Dispensierkopf sein, der mindestens eine Bewegungseinrichtung zur Bewegung eines Kolbens der Dispenserspitze aufweist. Die Bewegung der Bewegungseinrichtung erfolgt beim Laborautomaten insbesondere programmgesteuert, insbesondere beeinflusst durch mindestens einen Programmparameter. Der Transportkopf kann zur Flüssigkeitsdosierung dienen, insbesondere für die Dosierung in unterschiedlichen Bereichen; ein Transportkopf kann zur Dosierung einer flüssigen Probe mit einem Volumen ausgebildet sein, das aus einem für diesen Transportkopf spezifischen Volumenbereich ausgewählt sein kann: z.B. 1 - 50 µL, oder 20 -300 µL,oder 50 -1000 µL, ("I" und "L" stehen jeweils als Abkürzung für Liter). Ein Transportkopf kann als Einkanalkopf ausgebildet sein, bei dem nur eine Probe transportiert wird, oder kann als Mehrkanal, insbesondere Achtkanal- oder 12-Kanal ausgebildet sein, bei dem mehrere Proben parallel bearbeitet bzw. transportiert werden. Es sind vorzugsweise spezifische Transportbehältnisse vorgesehen, die in Abhängigkeit vom jeweiligen Typ von Transportkopf, insbesondere gemäß dem entsprechenden Volumenbereich eingesetzt werden können.

Ein Werkzeugelement kann z.B. ein Transportkopf für den Transport von Gegenständen sein, z.B. eine Trage- und/oder Greifwerkzeug zum Tragen und /oder Greifen eines Gegenstands. Ein Tragewerkzeug kann einen Befestigungsabschnitt zum lösbaren Befestigen des Gegenstands am Tragewerkzeug aufweisen, z.B. durch kraftschlüssiges und/oder formschlüssiges und/oder magnetisches Verbinden des Gegenstands mit dem Tragewerkzeug. Auf diese Weise können innerhalb der Arbeitsfläche oder zwischen mehreren Arbeitsbereichen und/oder Arbeitsflächen.

Ein Werkzeugelement kann ferner eine Behandlungseinheit sein, z.B. zur Durchführung einer thermischen, akustischen, optischen und/oder mechanischen Behandlung mindestens einer Probe.

Das Laborgerät, insbesondere der Laborautomat, kann eine Informationsleseeinrichtung aufweisen, um eine Information über eine Probe und/oder ein Probenbehältnis und/oder eine Behandlungsanweisung für diese Probe und/oder dieses Probenbehältnis zu lesen und, vorzugsweise, der Steuereinrichtung des Laborautomaten zur Verfügung zu stellen.

Das Laborgerät, insbesondere der Laborautomat, weist vorzugsweise mindestens eine Zeitgebereinrichtung und/oder vorzugsweise eine Zeitnehmereinrichtung auf, um die zeitabhängige Behandlung der Proben zu ermöglichen. Die zeitabhängige Behandlung erfolgt vorzugsweise programmgesteuert, und insbesondere gesteuert durch mindestens einen Programmparameter.

In einer bevorzugten Gestaltung des erfindungsgemäßen Laborautomaten ist dieser dazu ausgebildet, in Abhängigkeit von der vom Benutzer gewählten Behandlungsart und der vom Benutzer eingegebenen Programmparameter automatisch eine oder mehrere der nachfolgend genannten Komponenten automatisch zur Verwendung bei der programmgesteuerten Behandlung auszuwählen:
- mindestens ein geeignetes Probenbehältnis, insbesondere geeignet zur Aufnahme mehrere Proben, die gemeinsam bearbeitet werden sollen, die z.B. gemischt werden sollen oder zwischen denen eine chemische Reaktion oder biochemische, biologische oder biomedizinische Wechselwirkung auftreten soll;
- mindestens ein geeignetes Transportbehältnis, insbesondere Pipettenspitze und/oder Dispenserspitze;
- mindestens einen geeigneten Transportkopf, mit dem das vorzugsweise automatisch gewählte Transportbehältnis verbindbar ist,
- mindestens ein geeignetes Werkzeugelement, das der Durchführung der gewünschten Behandlung dient.

Vorzugsweise ist der erfindungsgemäße Laborautomaten dazu ausgebildet, in Abhängigkeit von der vom Benutzer gewählten Behandlungsart und der vom Benutzer eingegebenen Programmparameter automatisch einer oder mehrere der nachfolgend genannten Steuerparameter automatisch zur Verwendung bei der programmgesteuerten Behandlung auszuwählen:
- mindestens ein Zeitraum, zu dem ein bestimmter Arbeitsschritt der Behandlung durchgeführt wird;
- mindestens ein Probenvolumen und/oder Dosiervolumen;
- mindestens eine Arbeitsposition der mindestens einen Arbeitsfläche;
- Bewegungsparameter zur Festlegung des für die gewünschte Behandlung der Probe erforderlichen Bewegungsablauf der Robotereinrichtung des Laborautomaten.

Durch die automatische Auswahl der genannten Komponenten und/oder der Steuerparameter in Abhängigkeit von mindestens einem Programmparameter, insbesondere in Abhängigkeit von dem mindestens einen, vom Benutzer ausgewählten Programmparameter, ergibt sich für den Benutzer der Vorteil, dass er die Auswahl der Komponenten und Steuerparameter nicht selbst einzeln bestimmen muss. Vielmehr erfolgt die Auswahl der für die Behandlung notwendigen Steuerparameter mittels der vom Benutzer eingegebenen Programmparameter. Der Benutzer muss keine Kenntnisse über die Programmierung des Automaten besitzen. Dadurch ist die Verwendung des Laborautomaten besonders komfortabel.

Durch die automatische Auswahl der genannten Komponenten und/oder der Steuerparameter in Abhängigkeit von mindestens einem Programmparameter kann z.B. erreicht werden, dass aufgrund der Anwenderangaben (z.B. 20 Proben zu verdünnen) automatisch der richtige Pipettierkopf gegriffen wird, bzw., allgemeiner, der passende Tool, z.B. Transportkopf und/oder Werkzeugkopf verwendet wird. D.h. der Anwender muss dann nicht entscheiden, was das optimale Tool ist, sondern er entscheidet nur, was seine gewünschte Behandlung ist, z.B. die Nukleinsäureaufreinigung in einer gewünschten Weise. Der Benutzer, z.B. ein Biologe, eine biologisch-technischer Assistent, ein medizinisch-technischer Assistent muss dann also lediglich die Entscheidungen treffen, die er aufgrund seiner Ausbildung einfach und schnell treffen kann, er muss aber weder eine abstrakte Programmiersprache beherrschen, noch muss er größere Berechnungen anstellen.

Die Behandlungseinrichtung des Laborautomaten weist auf: vorzugsweise mindestens einen Arbeitsbereich, vorzugsweise mindestens eine Transporteinrichtung, vorzugsweise mindestens eine Behandlungseinheit.

Vorzugsweise hat das Laborgerät, insbesondere der Laborautomat die Eigenschaft, die vom Benutzer eingegebenen Programmparameter dauerhaft zu speichern und später automatisch oder vom Benutzer ausgelöst wieder zu laden. Der Benutzer kann dann einzelne der Parameter ändern, um eine Probenbehandlungsart vollständig zu definieren. Dadurch wird der Bedienkomfort erhöht und die Fehleranfälligkeit verringert. Dies ist vor dem Hintergrund vorteilhaft, dass Laborgeräte besonders effizient für wiederkehrende Prozesse verwendet werden.

Das Laborgerät weist vorzugsweise eine Benutzerschnittstelleneinrichtung zur manuellen Eingabe von Daten durch einen Benutzer, und zur Anzeige von Informationen, insbesondere von in diesen Daten enthaltenen Informationen auf, wobei die Benutzerschnittstelleneinrichtung eine Anzeigeneinrichtung, insbesondere ein Display, insbesondere ein Touch-Screen-Display aufweist.

Das erfindungsgemäße Laborgerät kann mehrere Behandlungseinrichtungen aufweisen. Die erfindungsgemäße Zugriffssteuerung kann mehreren erfindungsgemäße Laborgeräten zugeordnet sein, insbesondere mit diesen über eine zweite Schnittstelleneinrichtung und insbesondere zweite Datenverbindungen verbindbar sein oder verbunden sein. Dadurch kann mit einer Zugriffssteuerung der Zugriff der Benutzer auf mehr als ein Laborgerät oder auf ein Laborgerät mit mehr als einer Behandlungseinrichtung ermöglicht sein.

Weitere mögliche und bevorzugte Ausgestaltungen des erfindungsgemäßen Verfahrens lassen sich aus der Beschreibung des erfindungsgemäßen Systems und des erfindungsgemäßen Laborgeräts und von deren bevorzugten Ausgestaltungen ableiten.

Weitere bevorzugte Ausgestaltungen der erfindungsgemäßen Systems und des erfindungsgemäßen Laborgeräts und des erfindungsgemäßen Verfahrens ergeben sich aus der nachfolgenden Beschreibung der Ausführungsbeispiele in Zusammenhang mit den Figuren und deren Beschreibung. Gleiche Bauteile der Ausführungsbeispiele werden im Wesentlichen durch gleiche Bezugszeichen gekennzeichnet, falls dies nicht anders beschrieben wird oder sich nicht anders aus dem Kontext ergibt. Es zeigen:
Fig. 1 zeigt ein Ausführungsbeispiel des erfindungsgemäßen Laborgeräts, das in einem erfindungsgemäßen System verwendbar ist.
Fig. 2a zeigt ein erstes Ausführungsbeispiel des erfindungsgemäßen Systems, das einen Server aufweist.
Fig. 2b zeigt ein zweites Ausführungsbeispiel des erfindungsgemäßen Systems, das keinen Server aufweist.
Fig. 3 zeigt ein Ausführungsbeispiel eines erfindungsgemäßen Verfahrens.
Fig. 4 zeigt ein weiteres Ausführungsbeispiel des erfindungsgemäßen Laborgeräts, einen Thermocycler, der in einem erfindungsgemäßen System verwendbar ist.
Fig. 5 zeigt als weiteres Ausführungsbeispiel des erfindungsgemäßen Laborgeräts, einen Labor-Gefrierschrank, der in einem erfindungsgemäßen System verwendbar ist.

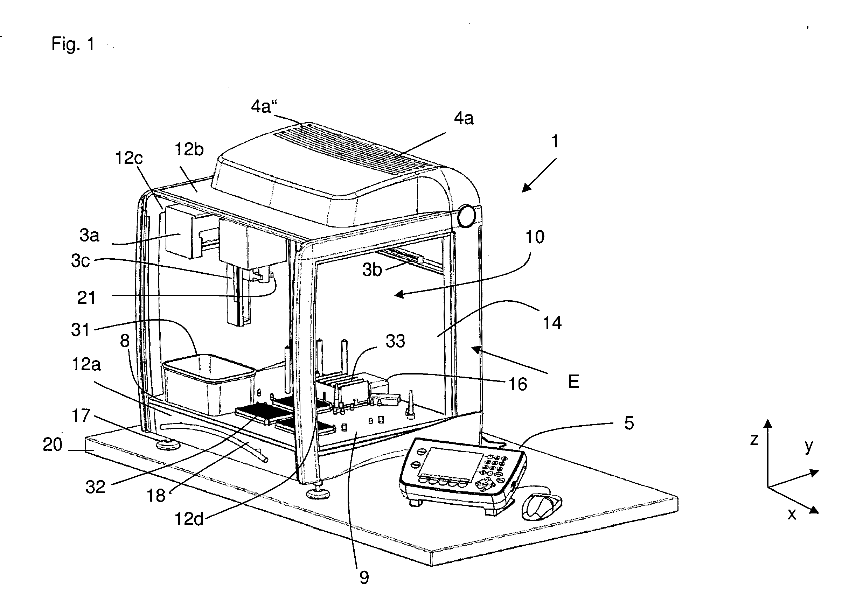

Fig. 1 zeigt das Laborgerät 1, das hier als Laborautomat 1 zur Behandlung von fluiden Proben, und zwar als Pipettierautomat ausgebildet ist. Der Laborautomat 1 dient der programmgesteuerten Behandlung dieser Proben.

Fig. 1 zeigt den Laborautomat 1 für die automatisierte Verarbeitung von flüssigen Proben, insbesondere für die programmgesteuerte Behandlung von flüssigen Proben. Der Laborautomat 1 ist ein Tischgerät und ist mit seinen vier Sockeln 17 auf dem Arbeitstisch 20 angeordnet. Es verfügt über eine elektronische Steuereinrichtung 2 (nicht gezeigt), die geeignet ist, einen Programmcode für die programmgesteuerte Behandlung der flüssigen Proben zu verarbeiten. Die Steuereinrichtung weist mindestens eine Schnittstelleneinrichtung (nicht gezeigt) zur Herstellung mindestens einer Datenverbindung mit mindestens einem weiteren Laborgerät auf. Die Steuereinrichtung ist dazu eingerichtet, über die mindestens eine Schnittstelleneinrichtung erste Behandlungsdaten zu empfangen, die zur Bearbeitung der Teilaufgabe verwendbar sind, die Steuerung der Bearbeitung der Teilaufgabe unter Verwendung dieser ersten Behandlungsdaten durchzuführen, zweite Behandlungsdaten in Abhängigkeit von der Bearbeitung der Teilaufgabe bereitzustellen, insbesondere zu erzeugen, die zur Bearbeitung einer weiteren Teilaufgabe des Behandlungsprozesses von dem weiteren Laborgerät verwendbar sind, und über die mindestens eine Schnittstelleneinrichtung wenigstens diese weiteren Behandlungsdaten zur Verwendung durch das weitere Laborgerät auszugeben.

Die Steuereinrichtung 2 ist in dem Steuerraum angebracht, der durch den Pfeil E bezeichnet ist und der von dem Arbeitsraum 10 durch eine vertikale Wand 14 getrennt ist. Der Steuerraum beherbergt auch die Spannungsversorgungskomponenten, die die geeignete Versorgungsspannung für die elektrischen Komponenten des Laborautomaten liefern. In die Steuereinrichtung 2 ist die Steuereinrichtung 103 der Zugriffssteuerung 100 aus Fig. 1 integriert.

Der Laborautomat 1 weist einen Behandlungsraum 10 zur Aufnahme der flüssigen zu behandelnden Proben auf, eine programmgesteuert steuerbare Probenbearbeitungseinrichtung 3, zum Durchführen von mindestens einem programmgesteuerten Behandlungsschritt an der mindestens einen Probe, die in dem Bearbeitungsraum angeordnet ist. Der Probenbearbeitungseinrichtung 3 sind die Komponenten 3a, 3b, 3c und 3d der Bewegungseinrichtung zugeordnet.

Der Laborautomat 1 weist ein Gehäuse 12 auf, das eine Vorderseite 12a aufweist, eine gegenüber der Vorderseite angeordnete Rückseite 12f (nicht gezeigt), eine Oberseite 12b, eine gegenüber der Oberseite angeordnete Unterseite 12e (nicht gezeigt) und gegenüberliegende laterale Seiten 12c und 12d. Die Seiten 12a, 12b und 12c sind im Wesentlichen aus einem Material, das für sichtbares Licht transparent ist.

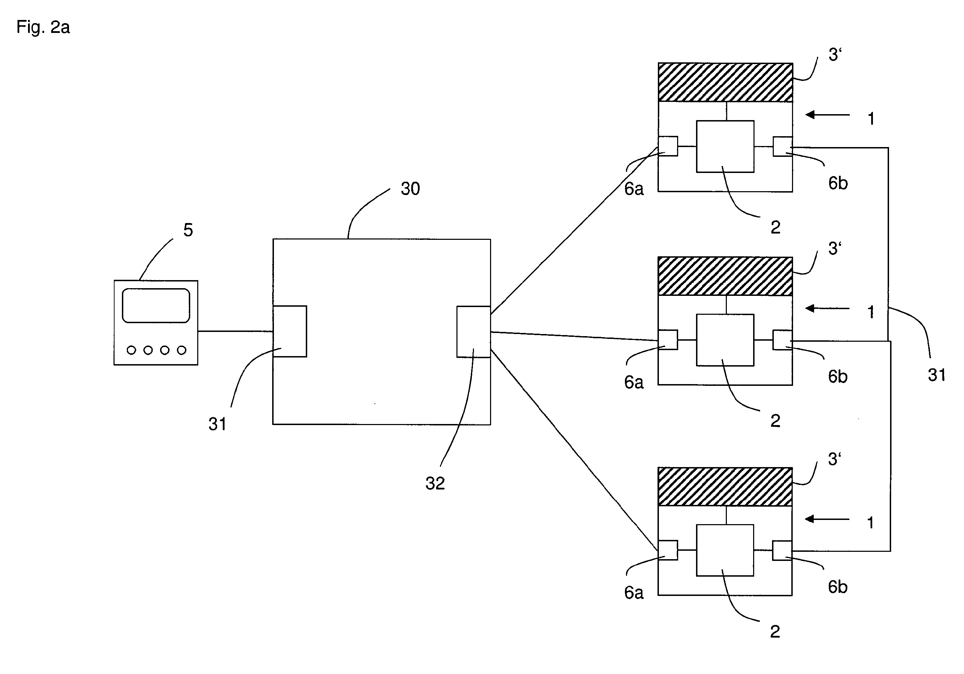

Die Vorderseite 12a, die im Wesentlichen wie eine Tür 12a, nämlich eine Schiebetür 12a ausgebildet ist, kann von Hand bewegt werden und/oder programmgesteuert bewegt werden und kann sich nach unten im wesentlichen entlang der z- Achse des kartesischen Koordinatensystems schließen. In Fig. 2a ist die geschlossene Position der Tür 12a gezeigt.

Der Behandlungsraum 10 ist durch die Vorderseite 12a und die beiden Seitenflächen 12c und 12d sowie die Wand 14 und die Arbeitsfläche 8, welche die obere Seite der Bodenplatte 9 bildet, beschränkt. Die Arbeitsfläche 8 stellt sechs Bearbeitungsstationen zur Verfügung. Die Bearbeitungsstationen sind im Wesentlichen ebene Flächen im Bearbeitungsbereich 8. Stifte dienen dazu, Lab-Ware, also beispielsweise Thermorack 33, Mikrotiterplatten 32 und Abfallbehälter 31 an der jeweiligen Bearbeitungsstation auszurichten. Die genaue Positionierung ermöglicht eine präzise robotergesteuerte Adressierung der Probenbehälter, insbesondere der Vertiefungen in den Mikrotiterplatten 32. Eine magnetische Trennvorrichtung 16 ist in der Nähe der Wand 14 angeordnet, wo ein Thermorack 33, d.h. eine temperaturgesteuerte Probengefäßhalterung angeordnet ist. Die magnetische Gabel (nicht gezeigt) der magnetischen Trennvorrichtung 16 fährt von der Seite in entsprechende Aufnahmekanäle des Thermoracks ein, um seitlich an den Laborgefäßen (Probenröhrchen) ihre magnetische Wirkung zu entfalten.

Der Laborautomat 1 weist zwei Dekontaminationseinrichtungen auf, eine elektronisch steuerbare Luftreinigungsvorrichtung 4a, 4a" für die Reinigung der Luft im Behandlungsraum, die elektronisch und digital durch die Steuereinrichtung gesteuert wird und die eine Belüftungsvorrichtung aufweist. Die Belüftungsvorrichtung weist drei Ventilatoren auf (nicht dargestellt), die einen Luftstrom von außerhalb der Vorrichtung in den Behandlungsraum transportieren.

Die Steuereinrichtung 2 weist ein Steuerprogramm auf. Der Laborautomat 1 weist eine Probenbearbeitungseinrichtung 3 auf, die eine Bewegungseinrichtung aufweist, mit drei Schienenelementen 3a, 3b, 3c, die Bewegungen entlang der y, x und z- Achse des kartesischen Koordinatensystems entsprechen. Zum Antrieb der Bewegung entlang der gewünschten Richtung sind elektronisch regelbare Linearmotoren vorgesehen. Auf diese Weise kann der Montagekopf 21 in jede gewünschte Position zugänglich in den Bearbeitungsraum 10 bewegt werden. Die Bewegungseinrichtung ist Teil eines Robotersystems der Probenbearbeitungseinrichtung 3. Mit dieser ist der Montagekopf 21 programmgesteuert transportierbar. Mit dem Montagekopf ist ein Werkzeuggerät verbindbar, z. B. ein Pipettierkopf oder ein Greifer. Die im Behandlungsraum angeordneten Bauteile, insbesondere die Probenbearbeitungseinrichtung 3, sind Bestandteil der Behandlungseinrichtung des Laborautomaten.

Der Laborautomat weist eine Benutzerschnittstelleneinrichtung 5 auf, mit der sich ein Benutzer lokal am Laborautomat anmelden kann.

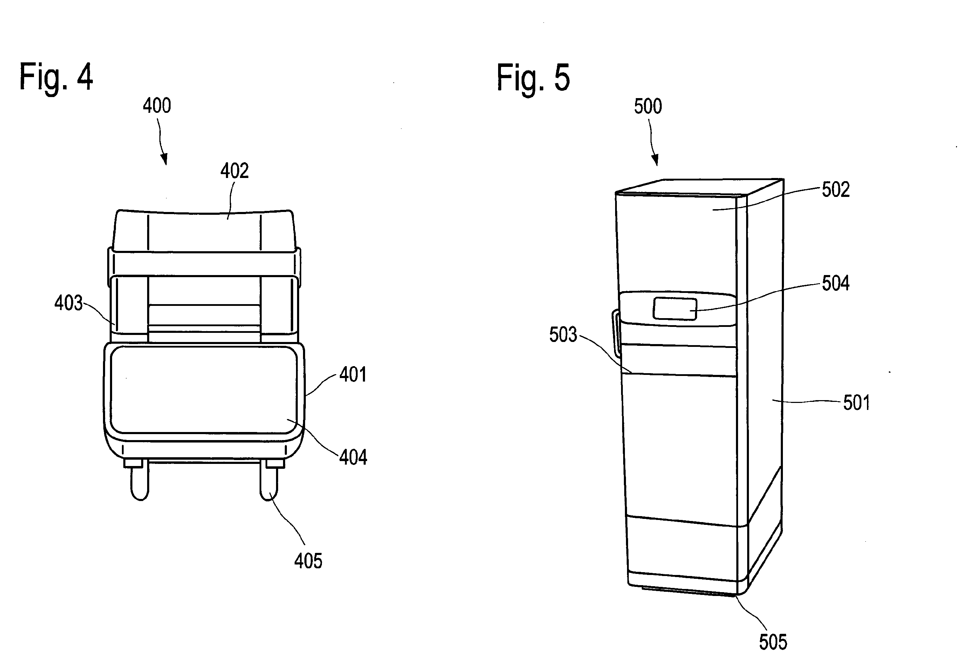

Fig. 4 zeigt als weiteres Ausführungsbeispiel das Laborgerät 400, ein Thermocycler. Das Laborgerät 400 ist ein Tischgerät Füßen 405 auf einem Arbeitstisch (nicht abgebildet) angeordnet. Es verfügt über eine elektronische Steuereinrichtung 406 (nicht gezeigt), die geeignet ist, einen Programmcode für die programmgesteuerte Behandlung der in der Regel flüssigen Proben zu verarbeiten. Die Behandlung ist üblicherweise eine zeitgesteuerte Temperierung. Die Steuereinrichtung weist mindestens eine Schnittstelleneinrichtung (nicht gezeigt) zur Herstellung mindestens einer Datenverbindung mit mindestens einem weiteren Laborgerät auf. Die Steuereinrichtung ist dazu eingerichtet, über die mindestens eine Schnittstelleneinrichtung erste Behandlungsdaten zu empfangen, die zur Bearbeitung der Teilaufgabe verwendbar sind, die Steuerung der Bearbeitung der Teilaufgabe unter Verwendung dieser ersten Behandlungsdaten durchzuführen, zweite Behandlungsdaten in Abhängigkeit von der Bearbeitung der Teilaufgabe bereitzustellen, insbesondere zu erzeugen, die zur Bearbeitung einer weiteren Teilaufgabe des Behandlungsprozesses von dem weiteren Laborgerät verwendbar sind, und über die mindestens eine Schnittstelleneinrichtung wenigstens diese weiteren Behandlungsdaten zur Verwendung durch das weitere Laborgerät auszugeben.

Die Steuereinrichtung 406 ist in dem Gehäuse 401 untergebracht. Das Gehäuse beherbergt auch die Spannungsversorgungskomponenten, die die geeignete Versorgungsspannung für die elektrischen Komponenten des Laborgeräts liefern. In die Steuereinrichtung 406 ist die Steuereinrichtung 103 der Zugriffssteuerung 100 aus Fig. 1 integriert.

Das Laborgerät 400 weist einen Behandlungsraum 403 zur Aufnahme der flüssigen zu behandelnden Proben auf. Der Behandlungsraum umfasst mindestens eine Behandlungseinrichtung 407 (nicht abgebildet) zum Durchführen von mindestens einem programmgesteuerten Behandlungsschritt an der mindestens einen Probe, die in dem Behandlungsraum angeordnet ist.

Die Steuereinrichtung 406 weist ein Steuerprogramm auf.

Das Laborgerät weist eine Benutzerschnittstelleneinrichtung 404 auf, mit der ein Benutzer sich lokal am Laborgerät anmelden kann.

Fig. 5 zeigt als weiteres Ausführungsbeispiel das Laborgerät 500, ein Labor-Gefrierschrank. Das Laborgerät ist ein Standgerät, das mit den Füßen 505 auf dem Boden (nicht abgebildet) positioniert wird. Es verfügt über eine elektronische Steuereinrichtung 506 (nicht gezeigt), die geeignet ist, die Temperierung des Laborgeräts durch einen Programmcode einzustellen, zu regeln und zu überwachen. Behandlung der in der Regel flüssigen Proben zu verarbeiten. Die Behandlung ist üblicherweise eine permanente Temperierung. Die Steuereinrichtung weist mindestens eine Schnittstelleneinrichtung (nicht gezeigt) zur Herstellung mindestens einer Datenverbindung mit mindestens einem weiteren Laborgerät auf. Die Steuereinrichtung ist dazu eingerichtet, über die mindestens eine Schnittstelleneinrichtung erste Behandlungsdaten zu empfangen, die zur Bearbeitung der Teilaufgabe verwendbar sind, die Steuerung der Bearbeitung der Teilaufgabe unter Verwendung dieser ersten Behandlungsdaten durchzuführen, zweite Behandlungsdaten in Abhängigkeit von der Bearbeitung der Teilaufgabe bereitzustellen, insbesondere zu erzeugen, die zur Bearbeitung einer weiteren Teilaufgabe des Behandlungsprozesses von dem weiteren Laborgerät verwendbar sind, und über die mindestens eine Schnittstelleneinrichtung wenigstens diese weiteren Behandlungsdaten zur Verwendung durch das weitere Laborgerät auszugeben. Erste Behandlungsdaten könnten z.B. eine Information über die Entnahme einer oder mehrerer Proben aus dem Labor-Gefrierschrank darstellen, zweite Behandlungsdaten eine Information über eine Vorbereitung des weiteren Laborgerätes, z.B. Vorheizung.

Die Steuereinrichtung 506 ist in dem Gehäuse 501 untergebracht. Das Gehäuse beherbergt auch die Spannungsversorgungskomponenten, die die geeignete Versorgungsspannung für die elektrischen Komponenten des Laborgeräts liefern. In die Steuereinrichtung 506 ist die Steuereinrichtung 103 der Zugriffssteuerung 100 aus Fig. 1 integriert.

Das Laborgerät 500 weist einen Behandlungsraum 503 zur Aufnahme der flüssigen zu behandelnden Proben auf. Der Behandlungsraum umfasst mindestens eine Behandlungseinrichtung 507 (nicht abgebildet) zum Durchführen von mindestens einem programmgesteuerten Behandlungsschritt an der mindestens einen Probe, die in dem Behandlungsraum angeordnet ist. Der programmgesteuerte Behandlungsschritt ist in diesem Fall die permanente Temperierung bei einer definierten Temperatur.

Die Steuereinrichtung 506 weist ein Steuerprogramm auf.

Das Laborgerät weist eine Benutzerschnittstelleneinrichtung 504 auf, mit der ein Benutzer sich lokal am Laborgerät anmelden kann.

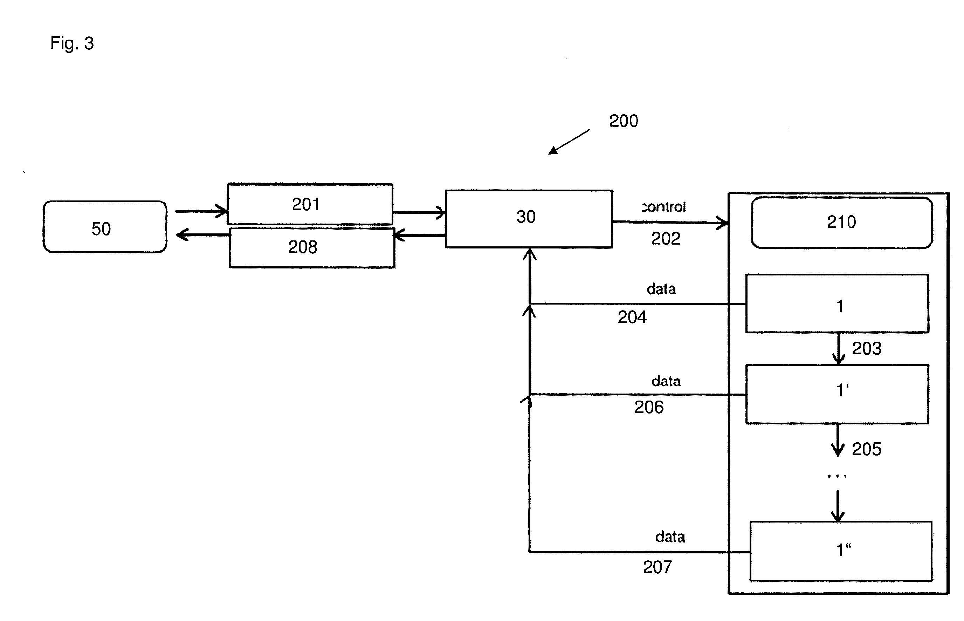

Fig. 2a zeigt ein erstes Ausführungsbeispiel des erfindungsgemäßen Systems, das einen Server 30 aufweist. Der Server 30 erhält in diesem Beispiel von der Benutzerschnittstelleneinrichtung 5 über die Schnittstelleneinrichtung 31 des Servers eine Einstellungsdatei, mit der der durchzuführende Behandlungsprozess 210 (siehe Fig. 3) definiert wird. Die Einstellungsdatei enthält eine Anzahl Parameter, mit der der durchzuführende Behandlungsprozess 210 zunächst eindeutig definiert wird.

Der Server ist über seine Schnittstelleneinrichtung 32 mit drei unterschiedlichen Laborgeräten 1, 1' und 1" verbunden. Das Laborgerät 1' könnte eine Labor-Zentrifuge sein und das Laborgerät 1" könnte ein Labor-Schüttler mit Inkubatorfunktion sein. Jedes der Laborgeräte übernimmt eine Teilaufgabe, die durch eine Behandlung mit der Behandlungseinrichtung 3' automatisch oder teilweise automatisch bearbeitet wird. Durch die kombinierte Verwendung der drei Laborgeräte wird der Behandlungsprozess bearbeitet, der den Einsatz der drei Laborgeräte erfordert. Die Laborgeräte sind jeweils über eine Schnittstelleneinrichtung 6a mit der Schnittstelleneinrichtung 32 des Servers verbunden und sind vorliegend zusätzlich über eine Schnittstelleneinrichtung 6b untereinander verbunden. Über diese Verbindungen sind Daten austauschbar, insbesondere erste und/oder zweite Behandlungsdaten.

Zu Beginn des erfindungsgemäßen Verfahrens 200 sendet der Benutzer 50 (siehe Fig. 3) die Einstellungsdatei an die systemzugehörige externe Datenverarbeitungseinrichtung, den Server (Schritt 201). Der Server authentifiziert dabei den Benutzer über eine Zugriffssteuerung (nicht gezeigt) des Servers. Die ersten und zweiten Behandlungsdaten, die bei der Bearbeitung des Behandlungsprozesses anfallen, kann der Server dann dem Benutzer zuordnen und eine Protokolldatei über den Behandlungsprozess durchführen. Dadurch kann die Korrektheit der Durchführung des Behandlungsprozesses dokumentiert werden.

Der Server 30 (Figur 3) steuert den Ablauf des Behandlungsprozesses, indem er ihn startet und dabei erste Behandlungsdaten an das erste Laborgerät 1 übersendet (Schritt 202). Das Laborgerät 1 benötigt diese ersten Behandlungsdaten, um die Behandlung des ersten Laborgeräts 1 festzulegen und zu steuern. Die ersten Behandlungsdaten können z.B. Informationen über die Probenanzahl beinhalten. Dabei erstellt das erste Laborgerät zweite Behandlungsdaten, die es über eine Schnittstelle 6b des Laborgeräts direkt an das zweite Laborgerät 1' übersendet (Schritt 203). Gleichzeitig werden diese an den Server übersandt (Schritt 204), wo sie protokolliert werden. Die zweiten Behandlungsdaten können z.B. die Anzahl der Laborgefäße mit Proben beinhalten, die vom zweiten Laborgerät 1' verarbeitet werden sollen. Die zweiten Behandlungsdaten, die das Laborgerät 1' bei der zweiten Behandlung erzeugt und direkt an das dritte Laborgerät 1" ausgibt (Schritt 205), dienen dem Laborgerät 1" als "erste Behandlungsdaten", die zur Durchführung der Behandlung im Laborgerät 1" benötigt werden. Gleichzeitig werden diese an den Server übersandt (Schritt 206), wo sie protokolliert werden. Das dritte Laborgerät 1" benötigt diese Behandlungsdaten zur Durchführung der dritten Behandlung und erzeugt dabei "zweite Behandlungsdaten". Diese werden an den Server übersandt (Schritt 207), wo sie protokolliert werden. Aus den gesammelten Behandlungsdaten erzeugt der Server eine Protokolldatei. Diese wird gespeichert bzw. an den Benutzer übersandt (Schritt 208). Bei diesem Verfahren werden essentielle Prozessdaten automatisch ausgetauscht, ohne dass der Benutzer diesbezüglich Eingaben oder Berechnungen durchführen muss. Dadurch sinkt die Fehleranzahl und die Effizienz steigt. Insbesondere kann mit einem solchen Verfahren der Verbrauch an Verbrauchsgut auf das erforderliche Minimum reduziert werden.

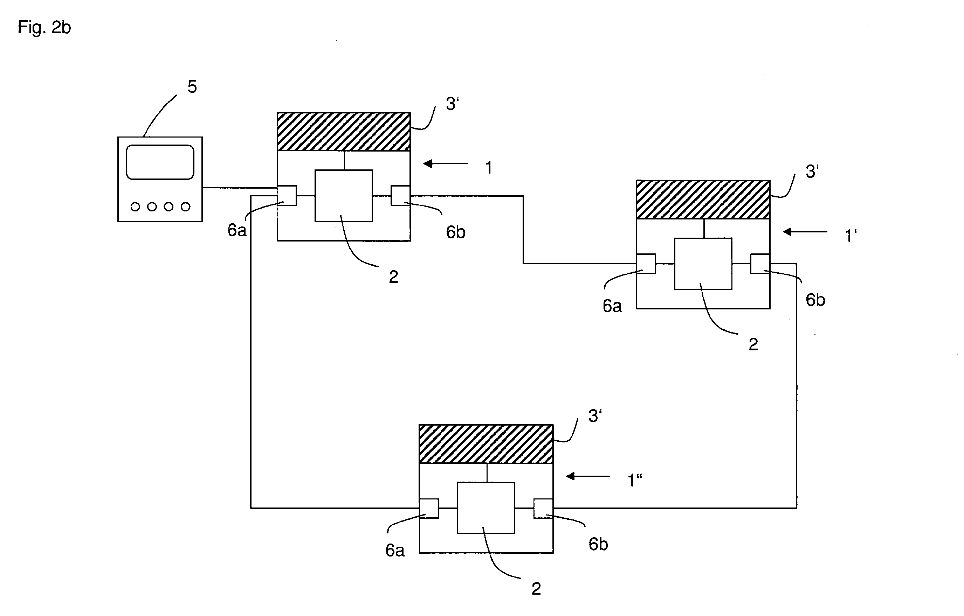

Fig. 2b zeigt ein zweites Ausführungsbeispiel des erfindungsgemäßen Systems, das keinen Server aufweist. Hier gibt der Benutzer über seine Benutzerschnittstelle 5 die Einstellungsdatei direkt an das erste Laborgerät ein, das ebenfalls den Benutzer über die Zugriffssteuerung des Laborgeräts identifiziert. In diesem Fall bilden insbesondere die in der Einstellungsdatei enthaltenen Daten als erste Behandlungsdaten. Auch bei diesem System können Behandlungsdaten weitergereicht werden. Insbesondere können diese bei jeder Weitergabe verschmolzen werden, um eine Protokolldatei zu erzeugen. Es ergeben sich ähnliche Vorteile wie im Ausführungsbeispiel des Systems gemäß der Fig. 2a.

## Patentansprüche

1. System zur gerätegesteuerten Bearbeitung einer Aufgabe durch einen Behandlungsprozess zur Bearbeitung mindestens einer Laborprobe, wobei die Aufgabe die Bearbeitung von mindestens einer ersten und einer zweiten Teilaufgabe beinhaltet,
wobei das System aufweist:
mindestens ein erstes Laborgerät gemäß Anspruch 7 aufweisend mindestens eine Behandlungseinrichtung, eine Steuereinrichtung und mindestens eine Schnittstelleneinrichtung zur Bearbeitung der ersten Teilaufgabe der Aufgabe, und mindestens ein zweites Laborgerät gemäß Anspruch 7 aufweisend mindestens eine Behandlungseinrichtung, eine Steuereinrichtung und mindestens eine Schnittstelleneinrichtung zur Bearbeitung der zweiten Teilaufgabe der Aufgabe,
wobei das erste Laborgerät dazu ausgebildet ist,
• die Steuerung der Bearbeitung der Teilaufgabe unter Verwendung von ersten Behandlungsdaten durchzuführen,
wobei das System dazu eingerichtet ist,
• zweite Behandlungsdaten in Abhängigkeit von der Bearbeitung der ersten Teilaufgabe bereitzustellen, insbesondere zu erzeugen, die zur Bearbeitung der zweiten Teilaufgabe des Behandlungsprozesses von dem zweiten Laborgerät verwendbar sind, und
• wenigstens diese zweiten Behandlungsdaten zur Verwendung durch das mindestens eine zweite Laborgerät auszugeben,
wobei das zweite Laborgerät dazu ausgebildet ist,
• über seine mindestens eine Schnittstelleneinrichtung zweite Behandlungsdaten zu empfangen, die zur Bearbeitung der zweiten Teilaufgabe verwendbar sind, und
• die Steuerung der programmgesteuerten Bearbeitung der zweiten Teilaufgabe unter Verwendung von zweiten Behandlungsdaten durchzuführen.

2. System gemäß Anspruch 1, das mindestens eine externe Datenverarbeitungseinrichtung, insbesondere einen Computer mit einer Speichereinrichtung aufweist, in der erste und/oder zweite Behandlungsdaten speicherbar sind, die zur Durchführung des Behandlungsprozesses verwendet werden.

3. System gemäß Anspruch 2, wobei die externe Datenverarbeitungseinrichtung dazu eingerichtet ist, erste und/oder zweite Behandlungsdaten mindestens eines Laborgeräts des Systems während des Behandlungsprozesses zu verarbeiten, insbesondere Behandlungsdaten vom ersten Laborgerät zu empfangen und Behandlungsdaten an das zweite Laborgerät zu senden.

4. System gemäß Anspruch 2 oder 3, das mindestens eine Benutzerschnittstelleneinrichtung aufweist, mit der Behandlungsdaten von einem Benutzer bestimmt werden können, wobei die Benutzerschnittstelleneinrichtung dazu ausgebildet ist, die Behandlungsdaten an mindestens ein Laborgerät auszugeben, insbesondere über die mindestens eine externe Datenverarbeitungseinrichtung.

5. System gemäß einem der vorherigen Ansprüche, wobei mindestens ein erstes Laborgerät dazu eingerichtet ist, bei der Bearbeitung einer Teilaufgabe mindestens einen ersten Datensatz zu erzeugen, der insbesondere Informationen über die Durchführung der Behandlung gemäß der ersten Teilaufgabe enthält, insbesondere Protokolldaten oder Verbrauchsmaterial-bezogene Daten, und diesen Datensatz als diese ersten Behandlungsdaten über die mindestens eine Schnittstelleneinrichtung auszugeben, insbesondere an das mindestens eine zweite Laborgerät oder eine externe Datenverarbeitungseinrichtung, und dass das System dazu eingerichtet ist, den mindestens einen ersten Datensatz in einer Datenbank zu sammeln und zu speichern.

6. System gemäß einem der vorherigen Ansprüche, wobei das System dazu eingerichtet ist, während dem Behandlungsprozess erste und/oder zweite Behandlungsdaten zu speichern und daraus eine Protokolldatei, insbesondere eine Zertifizierungsdatei zu erzeugen und zu speichern.

7. Laborgerät zur gerätegesteuerten Bearbeitung einer Teilaufgabe bei einem Behandlungsprozess zur Bearbeitung mindestens einer Laborprobe, der die Bearbeitung einer Teilaufgaben aufweisenden Aufgabe bei der Bearbeitung der mindestens einen Laborprobe unter Verwendung des Laborgeräts und mindestens eines weiteren Laborgeräts betrifft,
wobei das Laborgerät aufweist:
- eine Behandlungseinrichtung zur gerätegesteuerten Bearbeitung der Teilaufgabe,
- eine Steuereinrichtung zur Steuerung des Laborgeräts,
- mindestens eine Schnittstelleneinrichtung, zur Herstellung mindestens einer Datenverbindung mit mindestens einem weiteren Laborgerät;
wobei die Steuereinrichtung dazu eingerichtet ist,
• über die mindestens eine Schnittstelleneinrichtung erste Behandlungsdaten zu empfangen, die zur Bearbeitung der Teilaufgabe verwendbar sind, und
• die Steuerung der Bearbeitung der Teilaufgabe unter Verwendung dieser ersten Behandlungsdaten durchzuführen,
• zweite Behandlungsdaten in Abhängigkeit von der Bearbeitung der Teilaufgabe bereitzustellen, insbesondere zu erzeugen, die zur Bearbeitung einer weiteren Teilaufgabe des Behandlungsprozesses von dem weiteren Laborgerät verwendbar sind, und
• über die mindestens eine Schnittstelleneinrichtung wenigstens diese weiteren Behandlungsdaten zur Verwendung durch das weitere Laborgerät auszugeben.

8. Verfahren zur gerätegesteuerten Bearbeitung einer Teilaufgabe bei einem Behandlungsprozess zur Bearbeitung mindestens einer Laborprobe, der die Bearbeitung einer Teilaufgaben aufweisenden Aufgabe bei der Bearbeitung der mindestens einen Laborprobe unter Verwendung eines Laborgerätes betrifft, wobei das Laborgerät gemäß Anspruch 7 gestaltet ist, und mittels der Steuereinrichtung des Laborgeräts folgende Schritte des Verfahrens ausgeführt werden:
- Empfangen erster Behandlungsdaten, die zur Bearbeitung der Teilaufgabe verwendbar sind, über die mindestens eine Schnittstelleneinrichtung, und
- Steuerung der Bearbeitung der Teilaufgabe unter Verwendung dieser ersten Behandlungsdaten,
- Bereitstellung, insbesondere Erzeugung, weiterer Behandlungsdaten in Abhängigkeit von der Bearbeitung der Teilaufgabe, wobei die weiteren Behandlungsdaten zur Bearbeitung einer weiteren Teilaufgabe des Behandlungsprozesses von einem weiteren Laborgerät verwendbar sind, und
- Ausgabe wenigstens dieser weiteren Behandlungsdaten über die mindestens eine Schnittstelleneinrichtung zur Verwendung durch das weitere Laborgerät.

9. Verfahren zur gerätegesteuerten Bearbeitung einer Aufgabe durch einen Behandlungsprozess zur Bearbeitung mindestens einer Laborprobe, wobei die Aufgabe die Bearbeitung von mindestens einer ersten und einer zweiten Teilaufgabe unter Verwendung des Systems gemäß Anspruch 1 beinhaltet, wobei das Verfahren die Schritte aufweist:
• Steuerung der Bearbeitung der ersten Teilaufgabe unter Verwendung von ersten Behandlungsdaten durch das erste Laborgerät,
• Bereitstellung, insbesondere Erzeugung, zweiter Behandlungsdaten, insbesondere in Abhängigkeit von der Bearbeitung der ersten Teilaufgabe, insbesondere durch das erste Laborgerät, wobei die zweiten Behandlungsdaten zur Bearbeitung der zweiten Teilaufgabe des Behandlungsprozesses von dem zweiten Laborgerät verwendbar sind,
• Ausgabe wenigstens dieser zweiten Behandlungsdaten durch das erste Laborgerät zur Verwendung durch das mindestens eine zweite Laborgerät,
• Empfang dieser zweiten Behandlungsdaten über die mindestens eine Schnittstelleneinrichtung bei dem zweiten Laborgerät, und
• Steuerung der programmgesteuerten Bearbeitung der zweiten Teilaufgabe unter Verwendung dieser zweiten Behandlungsdaten durch das zweite Laborgerät.

10. Verfahren gemäß Anspruch 9, wobei das System mindestens eine externe Datenverarbeitungseinrichtung, insbesondere einen Computer mit einer Speichereinrichtung aufweist, in der erste und/oder zweite Behandlungsdaten speicherbar sind, die zur Durchführung des Behandlungsprozesses verwendet werden, wobei das Verfahren aufweist:
- Empfangen, insbesondere Verarbeiten, der zweiten Behandlungsdaten durch die mindestens eine externe Datenverarbeitungseinrichtung;
- Speichern der zweiten Behandlungsdaten in dieser Speichereinrichtung;
- Ausgabe der zweiten Behandlungsdaten durch die mindestens eine externe Datenverarbeitungseinrichtung an das zweite Laborgerät.

11. Verfahren gemäß Anspruch 9 oder 10, wobei das System dazu eingerichtet ist, Benutzerdaten zu empfangen, die vom Benutzer über eine Benutzerschnittstelle an das System ausgegeben werden, und das System dazu eingerichtet ist, aus den Benutzerdaten den Behandlungsprozess zu definieren, indem Behandlungsdaten in Abhängigkeit von den Benutzerdaten erzeugt werden, wobei diese Behandlungsdaten die Bearbeitung der Teilaufgaben durch das mindeste eine erste und zweite Laborgerät beeinflussen, insbesondere steuern.

12. Verwendung des Systems gemäß einem der Ansprüche 1 bis 6 oder des Laborgeräts gemäß Anspruch 7 zur Bearbeitung einer Aufgabe durch einen Behandlungsprozess zur Bearbeitung mindestens einer Laborprobe, wobei die Aufgabe die Bearbeitung von mindestens einer ersten und einer zweiten Teilaufgabe beinhaltet.

13. Verwendung gemäß Anspruch 12 in einem chemischen, biologischen, biochemischen, medizinischen oder forensischen Labor.
